# FASCICULE DE BREVET EUROPEEN

(11) **EP 0 554 261 B1**
(45) Date de publication et mention de la délivrance du brevet: **05.07.1995**
(21) Numéro de dépôt: 91914919.5
(22) Date de dépôt: 22.08.1991
(51) Int. Cl.: F16H 61/02, F16H 3/66

(54) **DISPOSITIF DE TRANSMISSION, EN PARTICULIER POUR VEHICULE AUTOMOBILE**
GETRIEBE, INSBESONDERE FÜR KRAFTFAHRZEUGE
TRANSMISSION DEVICE, IN PARTICULAR FOR A MOTOR VEHICULE

(30) Priorité: 18.10.1990 FR 9012901
(43) Date de publication de la demande: 11.08.1993
(73) Titulaire: ANTONOV AUTOMOTIVE TECHNOLOGIES B.V., 3013 AL Rotterdam (NL)
(72) Inventeur: ANTONOV, Roumen, F-75017 Paris (FR)
(74) Mandataire: Pontet, Bernard
(86) Numéro de dépôt international: FR9100684
(87) Numéro de publication internationale: WO9207206

(56) Documents cités:
- FR-A- 698 402
- US-A- 2 152 039
- US-A- 2 222 766
- US-A- 2 884 812
- US-A- 3 079 814
- US-A- 4 368 651

## Description

La présente invention concerne un dispositif de transmission à au moins deux rapports de transmission, en particulier pour véhicules automobiles.

On connaît d'après le US-A-2 884 812 un mécanisme de transmission de type différentiel dans lequel un porte-satellites se déplace axialement pour être solidarisé soit avec le bâti pour que le mécanisme fonctionne en réducteur, soit avec l'arbre d'entrée pour que le mécanisme fonctionne en prise directe. La composante axiale de la pression de denture engendrée par l'engrènement hélicoïdal pousse le porte-satellites vers la position de fonctionnement en réducteur, à l'encontre d'un ressort de rappel. Une roue libre est envisagée comme complément optionnel pour empêcher le porte-satellites de tourner en inverse.

Ce dispositif a divers inconvénients qui le rendent inapte à des applications telles que l'automobile, dans lesquelles les conditions sont très variables, aussi bien en ce qui concerne la valeur des paramètres que la vitesse à laquelle ils varient. En particulier, le dispositif connu ne prend pas en compte la vitesse. Or, dans une automobile, même si le couple moteur est constant, il est souhaitable, et même parfois nécessaire de changer de rapport de transmission quand certains seuils de vitesse sont franchis, notamment pour éviter les surrégimes et les sous-régimes du moteur, ou encore pour optimiser le rendemment du moteur. En outre, dans le dispositif connu, le pasage du fonctionnement en prise directe au fonctionnement en réducteur a lieu lorsque la force axiale créée par l'engrènement hélicoïdal surmonte la force du ressort. Mais dans ce cas, l'organe d'accouplement commence par se désolidariser de l'organe d'entrée, donc le couple moteur disparaît et la force de denture aussi. La disparition du couple moteur est due au fait qu'un moteur désaccouplé de la charge qu'il doit entraîner consomme toute sa puissance pour sa propre accélération et ne produit donc plus de couple sur son arbre. Compte-tenu de la disparition de la force de denture, le ressort va aussitôt repousser le porte-satellites en position de prise directe. Pour éviter cela, le porte-satellites du dispositif connu est associé à un dispositif à déclenchement brusque. Mais ce système va nécessairement nuire à la douceur des changements de rapport. Il peut peut-être convenir dans un dispositif simple où le changement s'opère toujours pour un couple prédéterminé par la force d'un ressort, mais il serait difficile de l'adapter à toutes les conditions de changement de rapport qui peuvent se présenter dans une automobile.

Le but de l'invention est de proposer un dispositif de transmission qui exploite la pression de denture comme mesure du couple transmis tout en étant compatible avec l'emploi dans un véhicule, notamment en matière de confort pendant les changements de rapport, et/ou d'aptitude à effectuer des changements de rapport de manière pertinente dans des cas de fonctionnement pouvant être très variés.

Suivant un premier aspect de l'invention le dispositif de transmission dans lequel au moins un mécanisme de transmission à au moins deux rapports de transmission comprend :
- un élément de bâti ;
- un élément d'entrée ;
- un élément de sortie ;
- des éléments de transfert de puissance entre l'élément d'entrée et l'élément de sortie, ces éléments de transfert comprenant au moins une combinaison d'engrenage à roues dentées hélicoïdales ;
- des moyens d'accouplement sélectif entre certains au moins desdits éléments, pour réaliser deux rapports de transmission différents selon que ces moyens d'accouplement sélectif sont à l'état accouplé ou à l'état désaccouplé ;
- des moyens sensibles au couple transmis, qui comprennent un montage à coulissement axial mutuel entre deux roues dentées hélicoïdales de la combinaison qui subissent des forces axiales opposées en fonction du couple qu'elles transmettent par leur engrènement dans la combinaison, et des moyens pour transmettre le déplacement axial mutuel de ces deux roues dentées au moins indirectement aux moyens d'accouplement pour piloter ceux-ci, les moyens d'accouplement étant soumis, au moins dans l'état désaccouplé, aux effets contraires des moyens sensibles au couple transmis et d'un moyen de sollicitation antagoniste ;
- des moyens du type roue libre montés fonctionnellement entre l'élément de bâti et un élément de réaction qui appartient auxdits éléments de transfert de puissance et peut tourner par rapport à l'élément d'entrée et l'élément de sortie, pour empêcher l'élément de réaction de tourner en sens rétrograde lorsque les moyens d'accouplement sont à l'état désaccouplé,
la combinaison d'engrenage étant différemment activée selon que les moyens d'accouplement sont à l'état accouplé ou désaccouplé, de façon que lors d'un changement de rapport ladite force axiale varie dans le sens stabilisant le rapport nouvellement en service, est caractérisé en ce que les moyens d'accouplement ont une capacité de transmission de couple limitée correspondant à un certain seuil, le passage de l'état accouplé à l'état désaccouplé étant déclenché par le fait que le couple à transmettre dépasse ledit seuil.

Le changement de rapport à partir de l'état accouplé ne résulte plus de la force de denture, mais de ce que le couple à transmettre dépasse la capacité de transmission des moyens d'accouplement jusqu'à ce que l'élément de réaction soit immobilisé par la roue libre. Ceci rétablit les conditions de fonctionnement selon l'autre rapport de transmission, avec rétablissement de la pleine force de denture, alors que celle-ci était au moins réduite lorsque les moyens d'accouplement étaient à l'état accouplé. La force de denture rétablie agit dans le sens confirmant le changement de rapport.

Ainsi, on supprime les risques d'hésitation du mécanisme lors du changement de l'état accouplé à l'état désaccouplé. En outre on réalise, entre les conditions de passage de l'état accouplé à l'état désaccouplé et inversement, un effet d'hystérésis dans lequel le seuil haut et le seuil bas du couple peuvent être choisis indépendamment l'un de l'autre et indépendamment des autres paramètres fonctionnels du dispositif de transmission.

Suivant un second aspect de l'invention, le dispositif de transmission dans lequel au moins un mécanisme de transmission à au moins deux rapports de transmission comprend :
- un élément de bâti ;
- un élément d'entrée ;
- un élément de sortie ;
- des éléments de transfert de puissance entre l'élément d'entrée et l'élément de sortie, ces éléments de transfert comprenant au moins une combinaison d'engrenage à roues dentées hélicoïdales ;
- des moyens d'accouplement sélectif entre certains au moins desdits éléments, pour réaliser deux rapports de transmission différents selon que ces moyens d'accouplement sélectif sont à l'état accouplé ou à l'état désaccouplé ;
- des moyens sensibles au couple transmis, qui comprennent un montage à coulissement axial mutuel entre deux roues dentées hélicoïdales de la combinaison qui subissent des forces axiales opposées en fonction du couple qu'elles transmettent par leur engrènement dans la combinaison, et des moyens pour transmettre le déplacement axial mutuel de ces deux roues dentées au moins indirectement aux moyens d'accouplement pour piloter ceux-ci, est caractérisé en ce que les moyens d'accouplement sont soumis aux effets contraires des moyens sensibles au couple transmis et d'un moyen de sollicitation antagoniste de type tachymétrique produisant une force qui varie en fonction d'une vitesse de rotation dans le dispositif de transmission.

Un moyen tachymétrique, par exemple un moyen centrifuge, est, comme les forces axiales de denture, capable de générer des forces importantes suffisantes pour actionner directement les moyens d'accouplement sélectif. On supprime ainsi, si on le désire, tout circuit de commande et circuit hydraulique de puissance pour piloter la transmission.

En même temps, on rend le dispositif capable de prendre, en ce qui concerne le rapport de transmission, une décision basée sur les deux paramètres majeurs, à savoir la vitesse de rotation et le couple de rotation.

Dans une version de l'invention, la combinaison d'engrenage est montée fonctionnellement entre l'élément d'entrée et un dispositif d'accouplement par friction constituant au moins en partie les moyens d'accouplement précités, les deux roues dentées de la combinaison étant montées pour que leur force axiale tende à serrer le dispositif d'accouplement par friction et réaliser ainsi un premier rapport de transmission, des moyens tels qu'un bain d'huile dans lequel travaille le dispositif d'accouplement par friction étant prévus pour amorcer la friction dans le dispositif d'accouplement par friction, et des moyens étant prévus pour désserrer sélectivement le dispositif d'accouplement par friction et activer un autre accouplement pour réaliser un deuxième rapport de transmission.

Un tel dispositif permet de supprimer l'embrayage ou le convertisseur de couple qui est classiquement prévu entre le moteur et la boîte de vitesses d'un véhicule automobile. Lorsque le moteur tourne au ralenti, le dispositif d'accouplement par friction patine. Si l'on fait augmenter la vitesse de rotation de l'élément d'entrée dans le dispositif, la légère friction occasionnée par la présence d'huile correspond à un certain couple à transmettre par les roues dentées axialement coulissantes et par conséquent à une légère force axiale de l'une par rapport à l'autre, d'où un léger serrage supplémentaire du dispositif d'accouplement par friction, et par conséquent une augmentation des forces de frottement et de la force axiale, et ainsi de suite jusqu'à embrayage complet du dispositif d'accouplement par friction. Avantageusement, on combine les deux aspects de l'invention dans une version où le moyen tachymétrique sollicite les moyens d'accouplement vers l'état accouplé, et dans cet état, qui correspond au plus élevé des deux rapports de transmission, la capacité de transmission de couple des moyens d'accouplement croît avec la force de serrage qui leur est appliquée.

Ainsi, le passage du rapport inférieur au rapport supérieur se produit lorsque la force du moyen tachymétrique dépasse la force de denture. Le passage inverse se produit lorsque le couple à transmettre dépasse la capacité de transmission des moyens d'accouplement, laquelle croit avec la vitesse de rotation puisque les moyens d'accouplement sont soumis à la force variable du moyen tachymétrique.

Dans une version de l'invention, la combinaison d'engrenage appartient à un mécanisme multirapport monté fonctionnellement entre un élément de transfert intermédiaire et l'élément de sortie, un mécanisme d'entrée à au moins deux rapports étant monté fonctionnellement entre l'élément d'entrée et l'élément de transfert intermédiaire.

Ainsi, selon le rapport qui est en service dans le mécanisme d'entrée, le couple transmis au mécanisme multirapport est plus ou moins important. Si le mécanisme d'entrée travaille sur son rapport inférieur, le couple transmis au mécanisme multirapport est accru de manière correspondante par rapport au couple moteur, et par conséquent les passages vers les rapports supérieurs sont retardés dans le mécanisme multirapport. On obtient ainsi un fonctionnement "sportif ", c'est-à-dire avec des rapports de transmission plus "courts" et des vitesses de rotation du moteur plus élevées.

De préférence, le mécanisme d'entrée est sensible au couple sur l'élément d'entrée pour passer automatiquement à un rapport de transmission relativement bas lorsque le couple sur l'élément d'entrée excède un seuil haut et à un rapport de transmission relativement élevé lorsque le couple sur l'élément d'entrée redescend en dessous d'un seuil bas.

Un autre aspect intéressant de l'invention résulte du fait que les forces axiales engendrées par les engrènements hélicoïdaux s'inversent lorsque le couple à transmettre change de sens. Il est donc possible de faire en sorte que les commandes soient différenciées selon que le moteur produit un couple moteur ou au contraire un couple résistant (lorsque le moteur fonctionne en retenue).

Par exemple, dans le cas d'une cascade de trois dentures telles que les dentures d'un planétaire, d'un satellite et d'une couronne dans un train planétaire, les réactions axiales sur le planétaire et sur la couronne sont de sens opposés l'une par rapport à l'autre tandis que le satellite, soumis à deux réactions axiales égales et opposées, est en équilibre. Pour la transmission d'un couple moteur, on peut faire en sorte que l'une des roues dentées s'appuie sur le carter pour que l'autre exerce sa réaction axiale dans le sens voulu pour le pilotage de la transmission. Lorsque le couple à transmettre est résistant, les forces axiales s'inversent et on peut faire en sorte qu'elles s'annulent en prévoyant des moyens d'appui mutuel axial entre le planétaire et la couronne.

Enfin, selon une version avantageuse de l'invention, le dispositif de transmission comprend entre l'élément d'entrée et l'élément de sortie une succession de modules à deux rapports sensibles chacun à la vitesse de rotation de l'un de ses éléments pour passer du rapport inférieur au rapport supérieur à l'encontre de la force axiale des deux roues dentées hélicoïdales de chaque module.

On obtient ainsi une remarquable simplicité de conception et la possibilité d'augmenter le nombre de rapports de la transmission en augmentant le nombre de modules. Ceux-ci peuvent, si on le désire, être tous rigoureusement identiques même en ce qui concerne les réglages.

Au début du fonctionnement, tous les modules fonctionnent sur leur rapport bas, la vitesse dans chacun d'eux est donc de plus en plus faible depuis l'élément adjacent à l'entrée jusqu'à l'élément adjacent à la sortie. Le couple au contraire augmente de l'élément d'entrée à l'élément de sortie. C'est donc l'élément d'entrée (faible couple, vitesse élevée) qui passe le premier à son rapport supérieur. Ceci réduit le couple dans le module suivant, mais ne modifie pas sa vitesse qui est déterminée par la vitesse de l'élément de sortie et les rapports de transmission dans les modules suivants qui n'ont pas été modifiés. Ainsi, à l'entrée du deuxième module, le couple est sensiblement égal à celui pour lequel le premier module est passé à son rapport supérieur, mais la vitesse de rotation est inférieure à celle pour laquelle le premier module est passé à son rapport supérieur. Par conséquent, le régime moteur doit augmenter avant que le deuxième module passe à son tour à son rapport supérieur et ainsi de suite.

D'autres particularités et avantages de l'invention ressortiront encore de la description ci-après.

Aux dessins annexés, donnés à titre d'exemples non limitatifs :
- la figure 1 est une vue schématique en perspective éclatée d'un train planétaire de type connu, avec visualisation de certains efforts intervenant en service ;
- les figures 2 et 3 sont des vues partielles en plan des dentures du planétaire et respectivement de la couronne du train planétaire de la figure 1 ;
- la figure 4 est un exemple de courbe de couple d'un moteur thermique en fonction de la vitesse de rotation pour différents pourcentages d'ouverture du papillon de gaz ;
- la figure 5 est une demi-vue en coupe axiale d'un mécanisme à deux rapports selon l'invention ;
- les figures 6 et 7 sont deux demi-vues du même mécanisme lorsqu'il fonctionne à son rapport haut et respectivement à son rapport bas ;
- la figure 8 est une demi-vue en coupe axiale d'un deuxième mécanisme selon l'invention ;
- les figures 9 à 12 sont des vues partielles en coupe de l'embrayage centrifuge du mécanisme de la figure 8, à quatre stades de fonctionnement ;
- la figure 13 est une vue analogue à la figure 8 mais montrant, dans la partie droite, le mécanisme fonctionnant en prise directe, et dans la partie gauche, le mécanisme fonctionnant selon son deuxième rapport ;
- la figure 14 est un détail de la figure 8, montrant certains appuis pendant le fonctionnement selon le premier rapport ;
- la figure 15 est une vue d'un détail de la figure 11, montrant certains appuis pendant le fonctionnement en retenue selon le deuxième rapport ;
- la figure 16 est une vue analogue à la figure 8 mais relative à un troisième mode de réalisation de l'invention ;
- la figure 17 est une vue d'un détail de la figure 16 à l'issue du processus d'embrayage :
- les figures 18 et 19 sont des demi-vues axiales de deux autres modes de réalisation de l'invention ;
- la figure 20 est une vue en perspective éclatée d'un autre mode de réalisation de l'invention ;
- les figures 21 à 24 sont des demi-vues de la transmission de la figure 20, dans quatre états fonctionnels différents, le boîtier de la transmission n'étant représenté qu'à la figure 20 ; et
- la figure 25 est une vue en coupe du dispositif de marche arrière du mode de réalisation selon la figure 20.

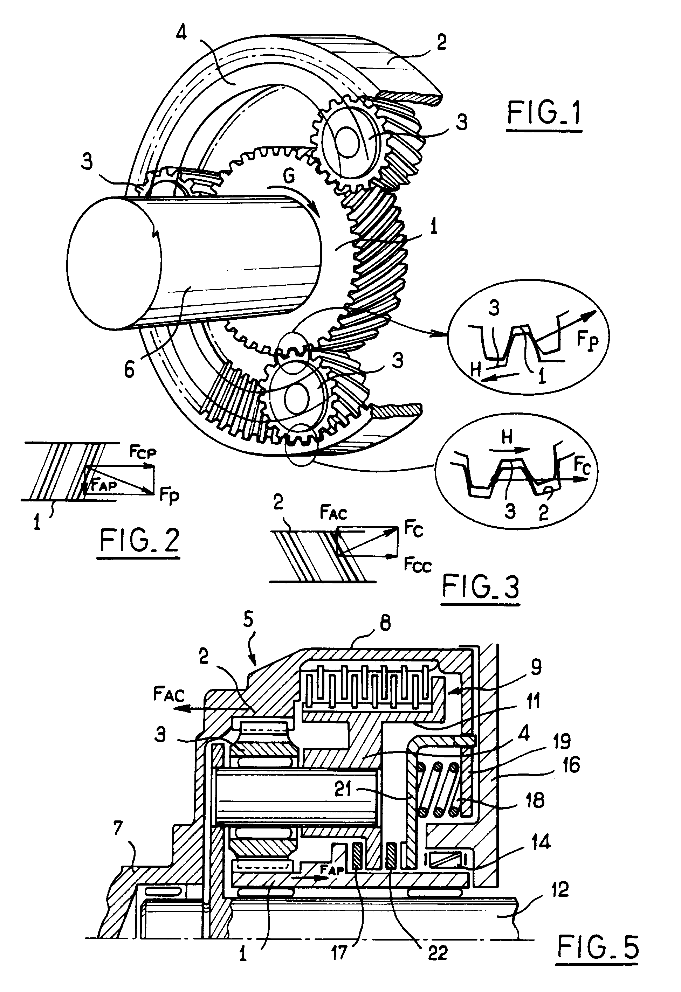

Comme le montre la figure 1, un train planétaire comprend classiquement une roue planétaire 1 à denture extérieure hélicoïdale, une couronne 2 à denture intérieure hélicoïdale de diamètre supérieur à la denture extérieure de la roue planétaire 1, et, entre le planétaire 1 et la couronne 2, des satellites 3 qui engrènent avec la roue planétaire 1 et avec la couronne 2.

Les satellites sont supportés en rotation par un porte-satellites 4 qui n'est représenté qu'en trait fin. Si l'on suppose que l'arbre 6 dont est solidaire la roue planétaire 1 est par exemple l'arbre d'entrée, on peut par exemple bloquer la couronne 2 ce qui permettra de recueillir au porte-satellites 4 un mouvement de rotation coaxial à l'arbre 6 mais moins rapide que celui de l'arbre 6. Le train planétaire fonctionne alors en démultiplicateur avec un rapport de réduction relativement élevé. Si au contraire on bloque le planétaire 1, et on relie la couronne 2 à l'entrée et le porte-satellites 4 à la sortie, le train fonctionne encore en démultiplicateur, mais avec un rapport de réduction moindre que dans le cas précédent. Si au contraire on relie l'un à l'autre la couronne 2 avec le porte-satellites 4, ou le porte-satellites 4 avec l'arbre 6, ou encore la couronne 2 avec l'arbre 6, tout le train planétaire tourne d'un seul bloc et constitue un dispositif de prise directe. On peut encore bloquer le porte-satellites 4 auquel cas l'arbre 6 et la couronne 2 tourneront en sens inverse et on aura ainsi réalisé un dispositif de marche arrière, démultiplicateur si l'entrée se fait sur l'arbre 6 et multiplicateur si l'entrée se fait sur la couronne 2.

Pour les modes de fonctionnement en réducteur ou en marche arrière, on a représenté avec des flèches F_{P} et F_{C} les efforts sur les dentures du planétaire 1 et de la couronne 2 lorsque par exemple la couronne 2 est bloquée et que le planétaire 1 transmet un couple dans le sens de la flèche G. La force de réaction exercée par les dents du satellite 3 sur celles du planétaire 1, symbolisée par la flèche F_{P} est dirigée en sens contraire à G autour de l'axe du mécanisme. Le satellite 3 recueille un couple H et transmet ainsi à la couronne 2 une force F_{C} qui, autour de l'axe du mécanisme, est orientée dans le même sens que F_{P}.

Ces forces F_{P} et F_{C} s'exercent sur les flancs des dents du planétaire 1 et respectivement de la couronne 2. Comme ces flancs sont obliques par rapport à l'axe du mécanisme en raison de la configuration hélicoïdale de la denture, les forces F_{P} et F_{C} sont en fait dirigées obliquement (figures 2 et 3) par rapport à l'axe du mécanisme, c'est-à-dire perpendiculairement à la surface de contact entre dents (exception faite de l'influence des frottements). Ces forces de contact F_{P} et F_{C} ont par conséquent une composante circonférentielle F_{CP} et F_{CC} utile pour la transmission du couple et une composante axiale F_{AP} et F_{AC} que l'on va utiliser selon l'invention.

Comme le montre la figure 1, les dents de la roue planétaire 1 sont inclinées en sens contraire des dents de la couronne 2 par rapport à l'axe du mécanisme, de sorte que la force axiale F_{AP} subie par le planétaire 1 est dirigée en sens contraire de la force axiale F_{AC} subie par la couronne 2, comme le montre la figure 3. Par conséquent, dans l'exemple représenté à la figure 1, compte tenu du sens G du couple transmis par le planétaire 1, celui ci est sollicité axialement vers l'observateur de la figure 1 tandis que la couronne 2 est sollicitée axialement en direction opposée. Les satellites 3, qui subissent deux réactions axiales opposées en leurs points d'engrènement, sont globalement en équilibre.

Lors du fonctionnement en prise directe par embrayage couplant l'entrée avec la sortie du train planétaire, les liaisons par engrenage ne transmettent plus de couple et par conséquent les forces axiales disparaissent. Si par contre la prise directe est par exemple obtenue par couplage de la couronne et du porte-satellites alors que l'entrée se fait sur le planétaire, des forces axiales subsistent sur le planétaire et sur le porte-satellites.

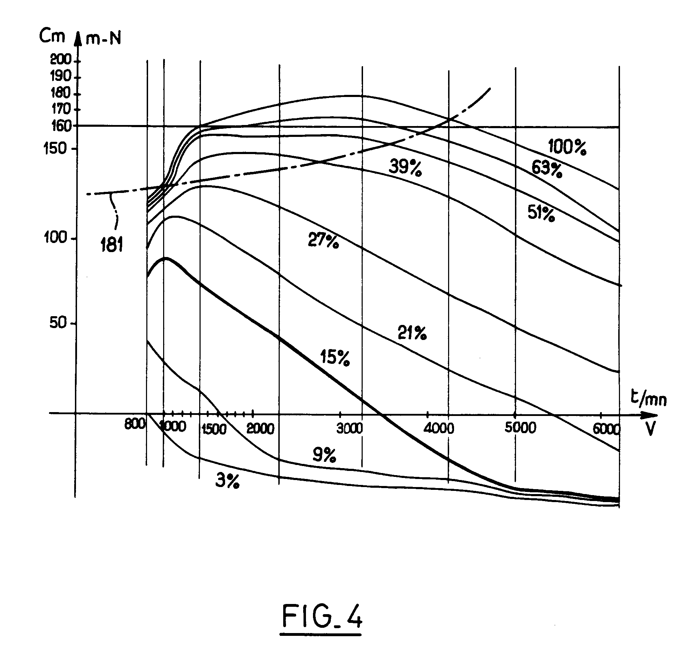

On va maintenant commenter en référence à la figure 4 les courbes de couple moteur Cₘ exprimées dans un exemple en m.N en fonction de la vitesse de rotation d'un moteur exprimé en t/mn. On voit que lorsque le moteur fonctionne à plein gaz, le couple moteur passe par une valeur maximale pour un régime moyen, c'est-à-dire de l'ordre de 3.000 tours/mn, à la suite de quoi le couple diminue jusqu'à 6.000 tours/mn qui constitue le régime maximal d'utilisation normale du moteur.

Ainsi, le couple moteur constitue non seulement une mesure de l'effort qui est demandé au moteur par le conducteur mais également, du moins à partir d'un certain régime d'environ 1.500 t/mn, une mesure de la vitesse de rotation du moteur. En d'autres termes, si le couple moteur est supérieur dans l'exemple à 160 m.N, valeur repérée par un trait horizontal, on sait que le régime moteur ne peut pas être supérieur à 4.500 tours/mn.

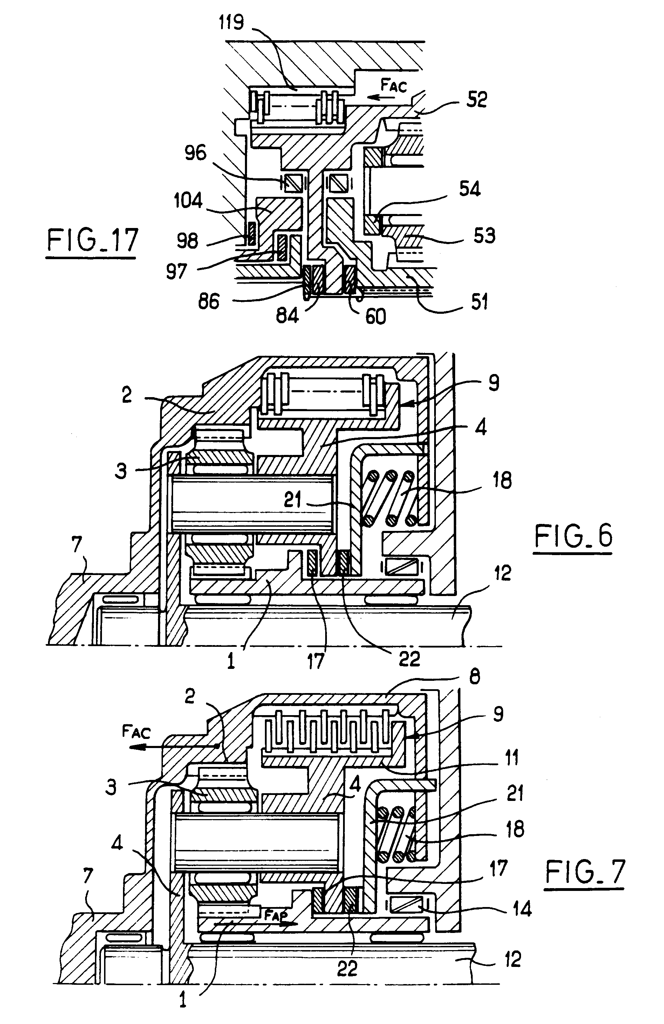

On va maintenant décrire différents modes de réalisation de l'invention qui exploitent les constatations ci-dessus, en référence aux figures 5 à 25 dans lesquelles notamment les jeux et courses axiaux sont éxagérés pour faciliter la compréhension, ces jeux et courses pouvant en réalité être difficilement décelables à l'oeil nu.

Le dispositif représenté à la figure 5 est un mécanisme à deux rapports avec changement automatique en fonction du couple présent sur un arbre d'entrée 7, lequel est relié rigidement à la couronne 2 d'un train planétaire 5 ainsi qu'au premier élément 8 d'un embrayage multidisques à bain d'huile. Le porte-satellites 4 du train planétaire est solidaire d'une part de l'autre élément 11 de l'embrayage 9, et d'autre part de l'arbre de sortie 12 du mécanisme. Le planétaire 1 du train planétaire est monté pour tourner librement autour de l'arbre de sortie 12 dans le sens dit "direct", c'est-à-dire le sens de rotation normal des arbres 7 et 12. Par contre, la rotation du planétaire 1 en sens rétrograde est empêchée par une roue libre 14 interposée entre le planétaire 1 et un boîtier 16 du mécanisme qui n'est que partiellement représenté.

Le planétaire 1, la couronne 2 et le porte-satellites 4 sont montés avec liberté de coulissement axial de chacun par rapport aux deux autres. Une butée axiale 17 est interposée entre le planétaire 1 et le porte-satellites 4 pour permettre au planétaire 1 de s'appuyer axialement sur le porte-satellites 4 dans le sens du desserrage de l'embrayage 9. Les dentures hélicoïdales du train planétaire sont orientées de telle manière que la réaction axiale F_{AP} subie par le planétaire 1 lorsqu'il est en rotation relative par rapport aux satellites 3 soit dirigée dans le sens appuyant axialement le planétaire 1 contre le porte-satellites 4 par l'intermédiaire de la butée 17.

Cette poussée axiale sur le porte-satellites 4 est contrée par un moyen antagoniste taré constitué par un ressort de compression 18 interposé entre une paroi 19 solidaire de la couronne 2 et un poussoir 21 monté coulissant axialement par rapport à la paroi 19 et capable de s'appuyer sur le porte-satellites 4 par l'intermédiaire d'une butée axiale 22, de façon que la force du ressort 18 s'exerce sur le porte-satellites 4 en sens contraire à la réaction axiale F_{AP}.

Comme le montre la figure 6, au repos, la force du ressort 18 n'est contrebalancée par aucune réaction du planétaire 1 et par conséquent le poussoir 21 pousse le porte-satellites 4 dans sa position extrême vers la gauche par rapport à la couronne 2 ce qui provoque le serrage de l'embrayage 9. Par conséquent, la butée 22 est sous compression, mais pas la butée 17. Au démarrage, si le couple à transmettre n'excède pas un certain seuil correspondant à la capacité de transmission de l'embrayage 9 sous le serrage de la force du ressort 18, l'embrayage 9, qui relie rigidement l'un à l'autre la couronne 2 et le porte-satellites 4, fait fonctionner le train planétaire en prise directe, c'est-à-dire que l'arbre de sortie 12 tourne à la même vitesse que l'arbre d'entrée 7. Le couple transmis ne produit aucune force axiale sur le planétaire 1 car il est transmis non par engrènement mais par l'embrayage 9 qui, en quelque sorte, court-circuite les liaisons par engrènement.

Si le couple présent sur l'arbre 7 excède la capacité de transmission de l'embrayage 9, celui-ci commence à patiner, et une certaine rotation relative se produit entre les dentures du train épicycloïdal, cette rotation relative fait apparaître dans la couronne 2 une force axiale F_{AC} (figure 7) et dans le satellite 3 une force axiale de sens contraire (non représentée) transmise au porte-satellites 4. Ces deux forces axiales tendent à desserrer l'embrayage 9 à l'encontre de l'action du ressort 18, de sorte que le patinage dans l'embrayage augmente et ainsi de suite jusqu'à ce que l'embrayage 9 soit complètement desserré. A un certain stade, le patinage dans l'embrayage 9 est tel que le planétaire 1 tend à tourner en sens inverse, ce qu'empêche la roue libre 14. Dès lors, la force axiale disparait dans les satellites 3 et la situation est alors celle représentée à la figure 7. Lorsque le planétaire 1 est immobilisé par la roue libre 14, le porte-satellites 4 et avec lui l'arbre de sortie 12 tournent en sens direct à une vitesse de rotation inférieure à celle de l'arbre d'entrée 7. Le mécanisme fonctionne alors en réducteur. Si la roue libre 14 n'était pas prévue, la charge à entraîner immobiliserait l'arbre 12 et le planétaire 1 tournerait inutilement en sens rétrograde.

Si le couple présent sur l'arbre d'entrée 7 diminue à nouveau au point que la force axiale F_{AP} devient inférieure à la force du ressort 18, celui-ci commande le retour à la situation de la figure 6. Le seuil de couple à partir duquel ceci se produit est un seuil bas, inférieur à un seuil haut à partir duquel l'embrayage 9 patine. Il est, en effet, possible de rendre ces deux seuils différents : le seuil haut est défini par la capacité de transmission de l'embrayage sous la force des ressorts 18 ; le seuil bas est défini par l'angle d'inclinaison des dents d'engrenage par rapport à l'axe, toujours par rapport à la force des ressorts 18. Les deux seuils peuvent donc être choisis indépendamment l'un de l'autre à la construction. Quand le ressort 18 commande le retour à la prise directe, l'embrayage 9 embraye franchement sans patiner excessivement, puisque le couple à transmettre est inférieur au seuil bas, donc très inférieur au seuil haut correspondant à la capacité de transmission de l'embrayage 9.

En pratique, en référence à la figure 4, si l'on suppose que le ressort 18 est taré pour que l'embrayage 9 patine au-dessus de 160 m.N, on voit que pour un régime moteur supérieur à 1.400 tours/mn et inférieur à 4.500 tours/mn, si le conducteur fait fournir au moteur brusquement sa pleine puissance, par exemple pour dépasser un véhicule ou franchir une côte, le couple fourni par le moteur va dépasser le seuil haut de 160 m.N, le mécanisme va se mettre à fonctionner en réducteur, accroissant le couple fourni aux roues du véhicule par rapport à celui fourni par le moteur. Le régime moteur va augmenter et peut-être passer dans la zone où le couple moteur est inférieur au seuil haut sans toutefois devenir inférieur au seuil bas. Dès que le conducteur relâche la pédale d'accélérateur, le couple sur l'arbre 7 diminue fortement et le ressort 18 fait repasser le mécanisme en prise directe.

Comme on sait à partir de quel régime maximal (4.500 tours/mn dans l'exemple), le couple ne peut plus atteindre ou dépasser le seuil de 160 m.N, on est certain que le passage automatique au fonctionnement en réducteur en fonction du couple sur l'arbre d'entrée 7 ne peut pas entraîner de sur-régime pour le moteur, à la seule condition que le rapport de réduction introduit par le mécanisme soit inférieur au rapport entre le régime maximal du moteur et le régime pour lequel le couple de seuil haut est disponible. Par exemple, si le couple de seuil haut est disponible jusqu'à 4.500 tours/mn et le régime maximal du moteur est de 6.000 tours/mn, il faut que le rapport de réduction dans le mécanisme soit au maximum d'environ 1,3 car 6.000/4.500 = 1,33.

Le fonctionnement en retenue a lieu en prise directe car le couple transmis inverse le sens de la réaction sur le planétaire 1 et la couronne 2 de sorte que le ressort 18 maintient en tout état de cause l'embrayage 9 en prise.

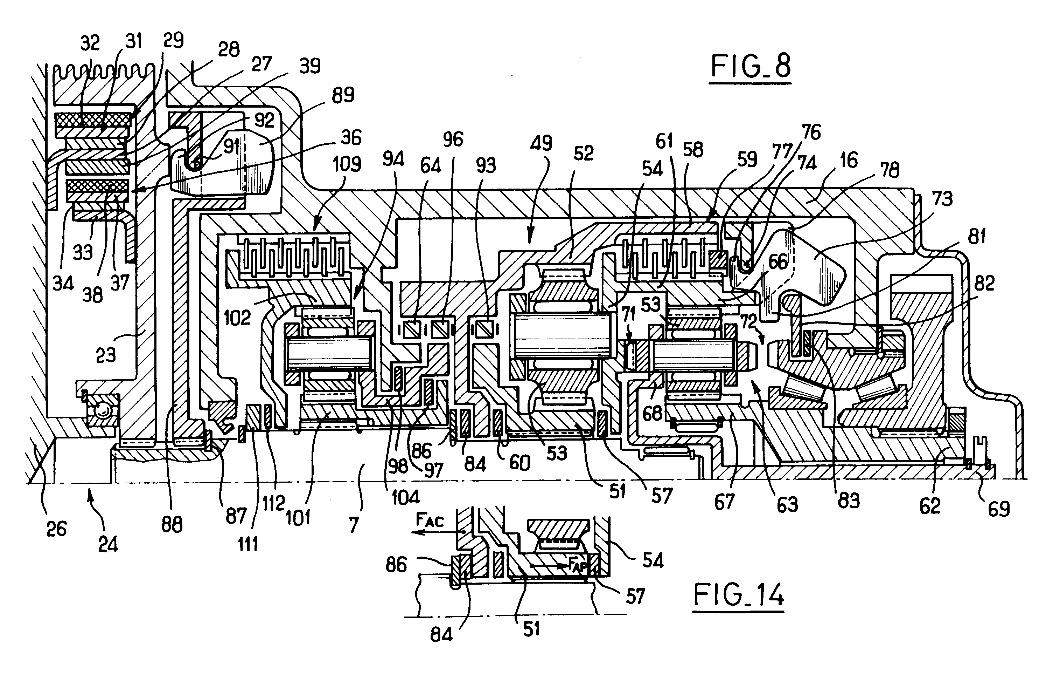

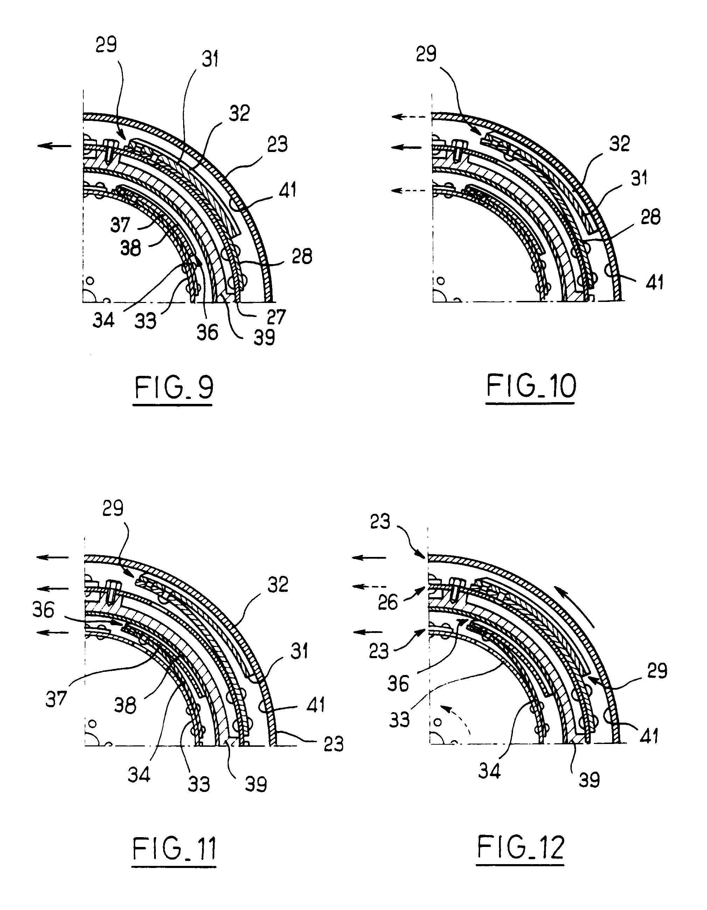

Dans l'exemple de la figure 8, l'arbre d'entrée 7 est lié en rotation au plateau récepteur 23 d'un embrayage centrifuge 24 comprenant en outre un plateau moteur 26. Comme le montrent également les figures 9 à 12, le plateau moteur 26 est solidaire d'une console cylindrique 27 à laquelle des lames de ressort 28 sont fixées par l'une de leurs extrémités en des points répartis à la périphérie de l'embrayage. L'autre extrémité des lames 28 est fixée à un patin 29 comprenant un sabot 31 et une garniture de friction 32.

Le plateau récepteur 23 porte lui-même une console cylindrique 33 de diamètre nettement inférieur à la console 27 du plateau moteur 26. De même, des lames de ressort 34 fixées par l'une de leurs extrémités à la console 33 portent à l'autre extrémité des patins 36 comprenant un sabot 37 et une garniture de friction 38 située en regard d'un cerceau 39 qui les entoure et qui est fixé contre la paroi radialement intérieure de la console 27.

Comme le montre la figure 9 quand aucune des deux consoles 27 et 53 solidaires des deux plateaux 26 et 23 respectivement n'a une vitesse qui excède un certain seuil bas égal par exemple à 1.200 tours/mn, les lames de ressort 28 et 34 maintiennent les patins 29 et respectivement 36 écartés d'une surface cylindrique intérieure 41 du plateau récepteur 23 et respectivement de la surface cylindrique intérieure du cerceau 39.

Si à partir de cette situation, la vitesse du plateau moteur augmente, les lames 28 et patins 29 engendrent en eux-mêmes une force centrifuge qui dépasse la force de rappel en flexion assurée par les lames 28, de sorte que les patins 29 viennent frotter contre la paroi 41 dans le sens produisant un arc-boutement sur les lames 28.

Ceci met progressivement le plateau 23 en rotation dans le même sens que le plateau moteur 26. La console 33 est donc à son tour entraînée en rotation, de même que les lames 34 et patins 36 qui, lorsqu'une certaine vitesse est atteinte par le plateau récepteur 23, viennent à leur tour frotter contre le cerceau 39, ce qui augmente la prise de friction entre les deux plateaux.

L'intérêt de la console 33 liée au plateau récepteur 23 et des patins 36 en combinaison avec le cerceau 39 est d'éviter l'inconvénient bien connu des embrayages centrifuges qui est de ne plus permettre le réembrayage si le moteur s'est arrêté alors que l'embrayage était à l'état débrayé. Ceci est dangereux lorsque le véhicule est en mouvement sur une descente. Comme le montre la figure 12, avec l'embrayage selon l'invention, la console 33 et les patins 36 sont dans un tel cas entraînés en rotation et les patins 36 viennent en prise de friction avec le cerceau 39 qui va donc mettre en mouvement le plateau moteur 26 et par conséquent relancer le moteur du véhicule. Une fois ce résultat atteint ou en train d'être atteint, les patins 29 vont à leur tour venir s'appliquer contre la paroi 41 et la situation de la figure 11 sera de nouveau atteinte.

Dans l'exemple de la figure 8, l'arbre d'entrée 7 est en prise par cannelures axialement coulissantes avec le planétaire 51 d'un train planétaire 49 dont le porte-satellites 54 peut être relié à l'arbre de sortie 62 par l'intermédiaire d'un dispositif de marche arrière 63.

Le dispositif de marche arrière 63 comprend essentiellement un train planétaire dont la couronne 66 est solidaire du porte-satellites 54, le planétaire 67 est solidaire de l'arbre de sortie 62 et le porte-satellites 68 peut, au moyen d'un baladeur à commande manuelle 69, être soit craboté en 71 avec le porte-satellites 54 du train 49 pour réaliser une prise directe entre le porte-satellites 54 et l'arbre de sortie 62, comme représenté à la figure 8, ou craboté en 72 avec le bâti 16 pour que le porte-satellites 68 soit empêché de tourner et réalise une inversion du sens de mouvement entre le porte-satellites 54 du train 49 et l'arbre de sortie 62, qui entraîne alors le véhicule en marche arrière.

Le porte-satellites 54, le planétaire 51 et la couronne 52 sont montés avec liberté de coulissement axial de chacun par rapport aux deux autres.

La couronne 52 du train planétaire 49 est solidaire du premier élément 58 d'un embrayage 59 dont l'autre élément 61 est solidaire du porte-satellites 54. Une roue libre 64 est interposée fonctionnellement entre la couronne 52 et le boîtier 16 pour empêcher la couronne 52 de tourner en sens rétrograde quand elle est libérée par l'embrayage 59.

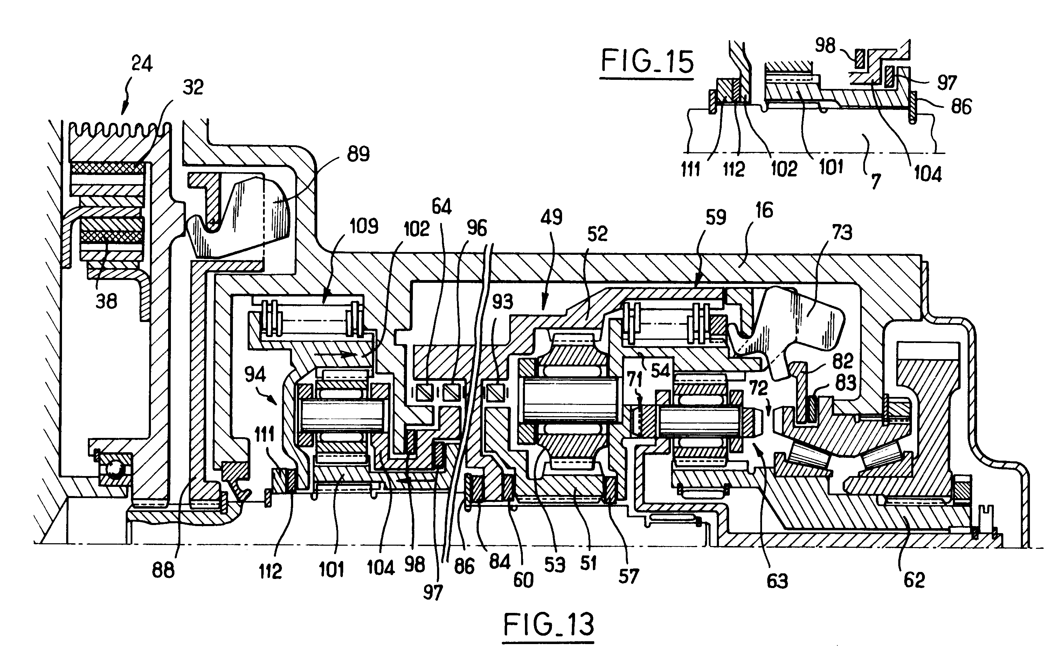

L'embrayage 59 est du type multidisques et il est commandé par des masselottes 73 articulées autour d'un axe virtuel 74 par rapport au porte-satellites 54 de façon à pouvoir pivoter radialement vers l'extérieur autour de l'axe 74 tandis qu'un bec 76 de ces masselottes comprime par l'intermédiaire d'un poussoir 77 les disques de friction de l'embrayage 59. De manière commode, les masselottes 73 sont constituées par des découpes en tôle toutes identiques (une seule d'entre elles est représentée à la figure 8) maintenues dans des plans axiaux du mécanisme par des fentes correspondantes 78 de l'élément d'embrayage 61. Chaque masselotte 73 est prolongée en direction de l'axe du mécanisme par une patte 81 qui s'appuie contre une bague 82 qui tourne avec le porte-satellites 54 en étant appuyée axialement contre le bâti 16 par une butée axiale 83. Compte tenu de la bague 82, les masselottes 73 ne peuvent pivoter radialement vers l'extérieur que si le porte-satellites 54 du train 49 se déplace axialement vers la gauche de la figure 8, comme cela est représenté à la figure 13. Cependant, comme représenté à la figure 14, un tel déplacement est contrarié par la réaction axiale F_{AP} du planétaire 51 lorsque celui-ci transmet un couple aux satellites 53 du train 49, cette réaction axiale étant transmise au porte-satellites 54 par l'intermédiaire d'une butée 57. Dans un tel cas la réaction axiale en sens contraire F_{AC} subie par la couronne 52 est reprise par l'arbre 7 par l'intermédiaire d'une butée axiale 84 et d'une bague d'arrêt 86.

L'arbre 7 est lui-même en butée, par une autre bague d'arrêt 87, contre un flasque 88 qui est en prise de cannelures avec l'arbre 7 et qui porte au voisinage de sa périphérie des masselottes 89 articulées par rapport à lui autour d'un axe 91 pour pouvoir s'écarter radialement de l'axe du mécanisme tandis qu'un bec 92 de ces masselottes s'appuie contre le plateau récepteur 23, axialement immobilisé. Ceci provoque sur le flasque 88 une poussée, transmise à l'arbre 7, en sens contraire à la réaction F_{AC} de la couronne 52. Une roue libre 93 interposée entre la couronne 52 et le planétaire 51 oblige le planétaire 51 à tourner au moins aussi vite que la couronne 52 : ainsi, lors du fonctionnement en retenue, le train planétaire 49 fonctionne de manière que la vitesse de l'arbre 7 soit au moins égale à celle de l'arbre de sortie 62.

La boîte de vitesses comprend un autre train planétaire 94 comprenant un planétaire 101 entraîné en rotation par l'arbre 7 par l'intermédiaire de cannelures, avec possibilité de coulissement axial, un porte-satellites 104 qui est relié à la couronne 52 du train 49 par l'intermédiaire d'une roue libre 96 lui interdisant de tourner plus vite que la couronne 52, et une couronne 1O2 qui est sélectivement reliée au bâti 16 par l'intermédiaire d'un embrayage multidisques 109.Les trois éléments 101, 102, 104 sont montés avec possibilité de coulissement axial de chacun par rapport aux deux autres. Les dentures hélicoïdales du train 94 sont inclinées en sens contraire de celles du train 49 de sorte que, comme représenté à la figure 13, la force axiale de la couronne 102 soit dirigée vers la droite de la figure dans un sens correspondant au serrage de l'embrayage 109. La force axiale de la roue planétaire 101 est donc dirigée vers la gauche de la figure et elle est transmise au bâti 16 par l'intermédiaire du porte-satellites 104 et de deux butées axiales 97 et 98. En d'autres termes, le planétaire 101 et la couronne 102 fonctionnent comme une pince serrant entre ses mors l'embrayage 109, une partie du bâti 16, la butée axiale 98, une partie du porte-satellites 104 et la butée axiale 97. La présence du porte-satellites 104 dans ce "sandwich" a pour seul but de permettre au porte-satellites 104 de s'étendre jusqu'à la roue libre 96.

L'arbre 7 porte en outre une collerette 111 qui s'appuie sur la couronne 102 par l'intermédiaire d'une butée axiale 112 dans le sens favorisant le serrage de l'embrayage 109, c'est-à-dire le même sens que la force axiale de la couronne 102. Le planétaire 101 peut s'appuyer dans le même sens contre la bague d'arrêt 86 de l'arbre 7.

Le fonctionnement de la boîte de vitesses est le suivant :
au démarrage la situation est sensiblement celle représentée à la figure 8, c'est-à-dire que tous les embrayages sont desserrés.

Si le moteur dépasse son régime de ralenti, il y a d'abord serrage de l'embrayage centrifuge 24, donc entraînement de l'arbre d'entrée 7 et du planétaire 51, donc tendance de la couronne 52 à tourner en sens rétrograde puisque la charge à entraîner, transmise au porte-satellites 54, tend à immobiliser ce dernier. Comme la couronne 52 est empêchée de tourner en sens rétrograde par la roue libre 64, elle reste immobile, bloquée par la roue libre 64, et le porte-satellites 54 se met en rotation à vitesse réduite, par exemple quatre fois moindre que celle de l'arbre 7. L'arbre 62 est donc lui-même entraîné à cette vitesse puisque le crabotage 71 fait fonctionner le dispositif de marche arrière comme une prise directe.

Pendant ce temps, le planétaire 101, également entraîné par l'arbre 7, provoque la rotation rapide, en sens rétrograde, de la couronne 102, par l'intermédiaire des satellites du train planétaire 94, dont le porte-satellites 104 est arrêté puisque, compte tenu de la roue libre 96, il ne peut pas tourner plus vite que la couronne 52 elle-même arrêtée. Aucun effort n'est transmis par le train planétaire 94 et par conséquent aucune réaction axiale notable n'y prend naissance.

Dans le train planétaire 49, la réaction axiale F_{AP} du planétaire 51 (figure 14) pousse le porte-satellites 54 suffisamment fortement vers la droite pour empêcher les masselottes 73 de s'écarter radialement, compte tenu de la vitesse encore très faible du porte-satellites 54. L'embrayage 59 reste donc à l'état desserré.

Pour l'instant, la réaction F_{AC} de la couronne 52, transmise à l'arbre 7, équilibre la poussée contraire du flasque 88 qui est fonction de la vitesse de rotation de l'arbre 7. Lorsque cette vitesse de rotation atteint une valeur suffisante, la poussée correspondante sur l'arbre 7 excède la poussée F_{AC}, l'arbre 7 coulisse vers la droite de sorte que, comme représenté dans la partie gauche de la figure 13, la collerette 111 pousse par l'intermédiaire de la butée 112 la couronne 102 dans la position de serrage de l'embrayage 109. Dès que le serrage commence, il apparaît dans la couronne 102 une réaction axiale croissante qui entraîne un serrage croissant dans l'embrayage 109 et ainsi de suite jusqu'à serrage complet de celui-ci. A ce stade, l'embrayage 59 est toujours desserré comme cela est représenté à la partie droite de la figure 8.

Le serrage de l'embrayage 109 a pour conséquence que le porte-satellites 104 et avec lui la couronne 52 du train 49 sont entraînés à une vitesse de rotation non nulle inférieure à celle de l'arbre 7. En d'autres termes le serrage de l'embrayage 109 fait fonctionner le train 94 en réducteur de vitesse entre l'arbre 7 et la couronne 52 du train 49. Le porte-satellites 54 du train 49 a alors une vitesse de rotation qui est intermédiaire entre celle de l'arbre 7 et celle de la couronne 52. Ceci correspond à un second rapport de transmission permis par cette boîte de vitesses. La vitesse de l'arbre de sortie 62 continue ainsi à augmenter jusqu'à ce que la force centrifuge des masselottes 73 devienne suffisante pour que celles-ci commencent à pivoter comme cela est représenté à la droite de la figure 13 en repoussant axialement vers la gauche le porte-satellites 54 et, par son intermédiaire, le planétaire 51 du train 49. Ceci provoque le serrage de l'embrayage 59, de sorte que le train planétaire 49 fonctionne en prise directe, c'est-à-dire qu'il y a prise directe entre l'arbre d'entrée 7 et l'arbre de sortie 62, par l'intermédiaire du planétaire 51, du porte-satellites 54 et du dispositif de marche arrière sélective 63. La couronne 52 se met alors à tourner plus vite que le porte-satellites 104 du train 94, mais cela est permis par la roue libre 96.

A partir de la situation de prise directe représentée à la figure 13, si le conducteur enfonce la pédale d'accélérateur, l'embrayage 59 peut, en fonction de la force centrifuge créée par les masselottes 73, se mettre à patiner pour permettre progressivement le retour au deuxième rapport de transmission par lequel le couple disponible sur l'arbre de sortie 62 est augmenté.

En retenue, comme exposé plus haut, la boîte de vitesses fonctionne spontanément en prise directe. On peut toutefois, au moyen d'un dispositif manuel, bloquer la roue libre 96 pour obliger le porte-satellites 104 à tourner à la même vitesse que la couronne 52 de sorte que, la couronne 102 étant bloquée, le planétaire 101 et par conséquent l'arbre 7 tournent à une vitesse supérieure à celle de l'arbre de sortie 62, moyennant frottement et donc freinage mécanique dans l'un au moins des embrayages 59 et 109.

Dans cette situation, comme représenté à la figure 15, les réactions dans la couronne 102 et le planétaire 101 s'inversent et s'annulent puisqu'elles sont toutes deux reportées en sens contraire sur l'arbre 7 par l'intermédiaire de la collerette 111 et respectivement de la bague d'arrêt 86.

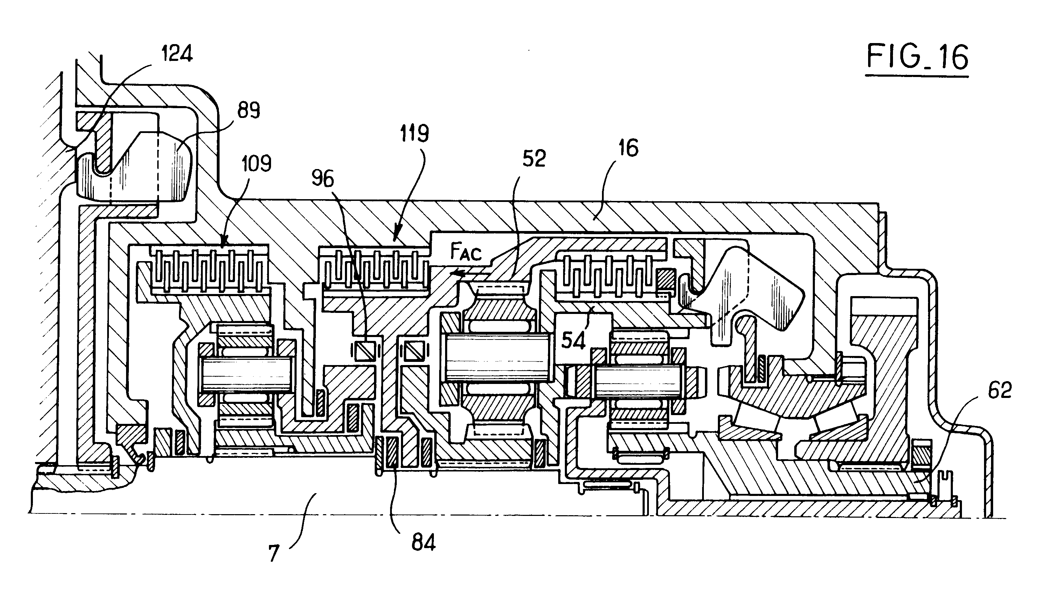

L'exemple de la figure 16 ne sera décrit qu'en ce qui concerne ses différences par rapport à celui de la figure 8. L'embrayage centrifuge 24 a été complètement supprimé, de même que la roue libre 64 précédemment interposée entre la couronne 52 et le bâti 16. Par contre, un embrayage multidisques 119 est interposé entre la couronne 52 et le bâti 16 de façon que les disques multiples de cet embrayage soient serrés les uns contre les autres et contre le bâti 16 par la couronne 52 lorsque celle-ci subit sa réaction F_{AC} dirigée vers la gauche.

Le fonctionnement de cette boîte de vitesses est le suivant :
lorsque le moteur et par conséquent l'arbre 7, entraîné par le volant d'inertie 124 du moteur, tournent à la vitesse de ralenti, la charge résistante attelée à l'arbre de sortie 62 immobilise le porte-satellites 54 de sorte que la couronne 52 tourne à vitesse réduite en sens rétrograde, ce que n'empêche plus la roue libre 64 qui a été supprimée. Ceci entraîne une légère friction dans l'embrayage 119 qui fonctionne dans l'huile donc avec contact visqueux entre ses disques successifs. Cette friction entraîne un léger couple résistant qui peut créer une légère force de réaction F_{AC} sur la couronne 52 que l'on peut, par sécurité, compenser par un petit ressort exerçant une poussée axiale contraire, non représenté.

Si le conducteur augmente la vitesse de l'arbre 7, la friction dans l'embrayage 119 augmente, la réaction F_{AC} augmente également, la couronne 52 se déplace dans le sens du serrage de l'embrayage 119, ce qui augmente encore la réaction axiale et ainsi de suite jusqu'à serrage complet et progressif de l'embrayage, donc immobilisation de la couronne 52 et par conséquent mouvement du porte-satellites 54 et de l'arbre de sortie 62 dans le sens direct avec un rapport de transmission d'environ 1 à 4 entre l'entrée 7 et la sortie 62. Pour permettre que ce processus ait lieu sans risque, on peut installer un rappel des masselottes 89 pour que celles-ci ne puissent pousser l'arbre 7 vers la droite qu'à partir d'environ 2.500 t/mn.

La suite du fonctionnement en marche avant se déroule comme décrit en référence aux figures 8 à 15, excepté que le déplacement de l'arbre 7 dans le sens embrayant l'embrayage 109 produit aussi le débrayage de l'embrayage 119 par l'intermédiaire de la butée 84 repoussant la couronne 52.

En retenue, toutefois, les forces axiales et en particulier celle de la couronne 52 s'inversent, ce qui produit le desserrage de l'embrayage 119.Ceci n'a pas d'inconvénient puisque le mouvement provenant de l'arbre de sortie 62 est transmis par la couronne 52 à l'arbre 7 via la roue libre 96.

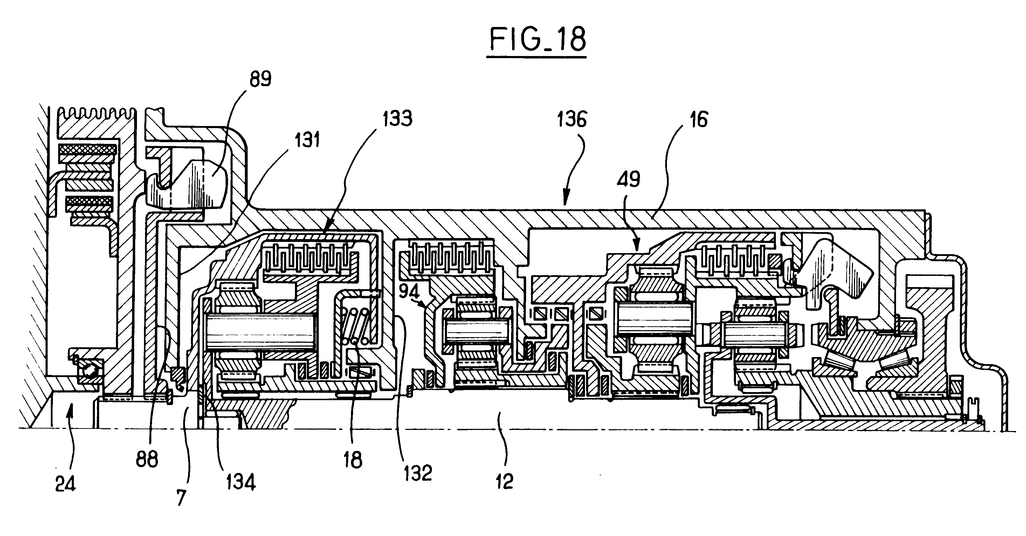

La situation lorsque l'embrayage 119 est serré est représentée à la figure 17. Lorsque l'embrayage 59 est lui-même serré, le planétaire 51 est, comme représenté, repoussé par le porte-satellites 54 (non visible à cette figure) pour s'appuyer axialement contre la couronne 52 par l'intermédiaire d'une butée axiale 60, ce qui renforce la force de serrage sur l'embrayage 119.

En retenue, les éventuelles réactions dans le planétaire 51 et la couronne 52 s'inversent par rapport à la situation où le couple sur l'arbre 7 est moteur, et elles s'équilibrent l'une l'autre puisqu'elles sont transmises sur deux faces opposées de la butée axiale 60.

Dans l'exemple de la figure 18, on a interposé un mécanisme d'entrée 133 qui est du type décrit à la figure 5 dans une boîte de vitesses selon la figure 8, entre une nouvelle cloison 132 du bâti 16 et la paroi étanche 131 qui sépare le flasque 88 et l'embrayage centrifuge 24 d'une part et les autres parties de la boîte travaillant dans l'huile d'autre part. La cloison 132 correspond à la partie du bâti 16 qui était visible à la figure 5. On appelle ci-après "mécanisme multirapport 136" la partie de la boîte de la figure 18 qui correspond à celle de la figure 8.

L'arbre de sortie 12 du mécanisme de la figure 5 devient dans le dispositif de la figure 18 un arbre intermédiaire 12 qui est prolongé vers les trains planétaires 49 et 94 pour les traverser et être relié à eux exactement comme l'était l'arbre 7 dans l'exemple de la figure 8.

L'arbre d'entrée 7 de la figure 18 peut tourner par rapport à l'arbre intermédiaire 12, comme cela est nécessaire lorsque le mécanisme d'entrée 133 fonctionne en réducteur. Toutefois, une butée axiale 134 est interposée entre les arbres 7 et 12 pour que l'arbre 7 puisse pousser l'arbre 12 vers l'intérieur du mécanisme multirapport 136 sous l'action des masselottes 89 et que l'arbre 12 puisse pousser l'arbre 7 vers l'embrayage centrifuge 24 à l'encontre de l'effet des masselottes 89 comme cela a été décrit à propos de la figure 8.

Lorsque, en fonction du couple présent sur l'arbre 7, le mécanisme d'entrée 133 fonctionne en prise directe comme cela a été décrit en référence aux figures 5 à 7, le mécanisme multirapport 136 fonctionne lui-même comme cela a été décrit à propos des figures 8 à 15.

Si au contraire, toujours comme cela a été décrit à propos des figures 5 à 7, le mécanisme d'entrée 133 fonctionne en réducteur, le mécanisme multirapport 136 fonctionne encore comme cela a été décrit à propos des figures 8 à 15, à trois réserves près :
- comme le couple présent sur l'arbre 12 est augmenté, le passage de première en deuxième nécessite une force plus importante de la part des masselottes 89 et se fera donc à un régime moteur plus élevé ;
- pour la même raison, le passage de deuxième en troisième nécessitera une force plus importante de la part des masselottes 73 et par conséquent se fera pour une vitesse plus élevée de l'arbre de sortie 62 ;
- une fois ce passage de deuxième en troisième effectué, le régime du moteur va augmenter jusqu'à ce que le couple moteur diminue suffisamment pour que le ressort taré 18 provoque le passage du mécanisme d'entrée 133 en prise directe, qui constitue alors un quatrième rapport de transmission.

On a ainsi réalisé une transmission automatique pour véhicule qui fonctionne soit, en conduite paisible, avec trois rapports, et des régimes moteur relativement bas, soit, en conduite sportive, avec quatre rapports dont les trois premiers sont différents des deux premiers de la conduite paisible en faisant fonctionner le moteur à des régimes proches de la puissance maximale, qui optimisent les performances.

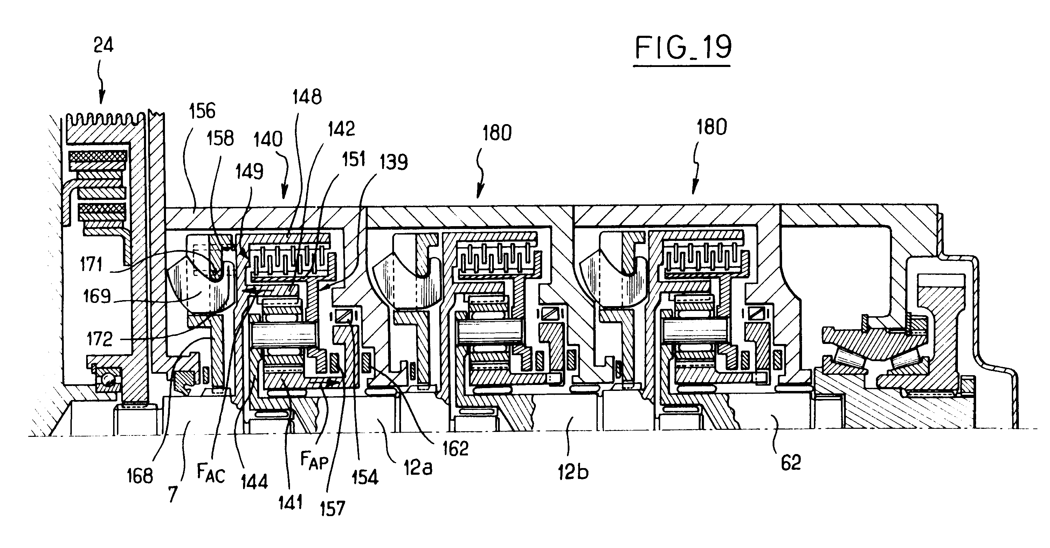

Dans l'exemple représenté à la figure 19, le dispositif de transmission est constitué par un embrayage centrifuge 24 tel que celui de la figure 8 suivi d'un empilage axial d'un module 140 et par exemple deux modules 180 comprenant chacun un train planétaire 139 dont, comme à la figure 5, le planétaire 141 tourne librement sur l'arbre de sortie 12a, 12b et respectivement 62 et est empêché de tourner en sens rétrograde par rapport au bâti 156 par une roue libre 154, la couronne 142 est reliée à l'arbre d'entrée 7 et respectivement 12a, 12b ainsi qu'au premier élément 148 d'un embrayage multidisques 149 dont l'autre élément 151 est solidaire du porte-satellites 144 lui-même solidaire de l'arbre de sortie 12a, 12b et 62. Le planétaire 141, la couronne 142 et le porte-satellites 144 sont montés avec liberté de coulissement axial de chacun par rapport aux deux autres.

Chaque arbre d'entrée 7, 12a, 12b est en prise de cannelures avec un flasque 168 supportant de manière pivotante des masselottes 169 pouvant s'écarter radialement de l'axe du mécanisme autour d'un axe de pivotement 171 de façon que leur bec 172 repousse axialement la couronne 142 et avec elle l'arbre 7 dans le sens du serrage de l'embrayage 149 à l'encontre de la force axiale F_{AC} de ladite couronne 142, qui tend donc à desserrer l'embrayage 149. La force axiale F_{AP} du planétaire 141, dirigée en sens contraire, est reprise par le bâti 156 par l'intermédiaire d'une butée axiale 162. Une butée axiale 157 est interposée entre le porte-satellites 144 et le planétaire 141 pour permettre entre eux un appui axial mutuel dans le sens serrant l'embrayage 149 lors du fonctionnement en retenue.

L'arbre d'entrée 7 dans le module 140 le plus proche de l'embrayage 24 constitue l'arbre d'entrée dans l'ensemble du dispositif de transmission. Un arbre de transfert 12a constitue l'arbre de sortie de ce mécanisme et également l'arbre d'entrée dans le module 180 suivant, tandis qu'un arbre de transfert 12b constitue l'arbre de sortie du premier module 180 et l'arbre d'entrée dans le deuxième module 180, dont l'arbre de sortie 62 constitue l'arbre de sortie de l'ensemble du dispositif de transmission. Toutefois, des moyens de marche arrière non représentés, peuvent être prévus entre l'arbre 62 et la sortie de l'ensemble du dispositif de transmission.

Les deux modules 180 peuvent être rigoureusement identiques, y compris quant à leurs réglages. Il est par ailleurs possible d'empiler ainsi axialement plus de deux mécanismes modulaires 180, pour augmenter le nombre de rapports dans la transmission.

Le module 140 diffère des deux modules 180 en ce que les masselottes 169 y sont beaucoup moins nombreuses, par exemple seulement 3 ou 4 masselottes au lieu de 30 ou 40. Entre les masselottes du module 140 sont disposés des ressorts de compression 158 qui poussent axialement la couronne 142 dans le sens du serrage de l'embrayage 149 par rapport au porte-satellites 144 appuyé sur le bâti 156 par la butée 162. Le module 140 va jouer le rôle d'un mécanisme d'entrée comme le mécanisme 133 de la figure 18, et les modules 180 forment ensemble un mécanisme multirapport.

Le fonctionnement est le suivant : au début, l'embrayage 149 du module 140 est serré par les ressorts 158 et les embrayages 149 des modules 180 sont desserrés, de sorte que tous les modules 180 fonctionnent en réducteur, si bien que le premier de ces modules est celui où la vitesse de rotation est la plus élevée et le couple transmis le plus faible. C'est donc lui qui atteint en premier les conditions dans lesquelles ses masselottes 169 parviennent à serrer l'embrayage 149 de sorte que ce module passe en prise directe. Ceci réduit le couple transmis au module 180 suivant, mais non pas sa vitesse de rotation qui est déterminée par la vitesse de la sortie 62. Il faut donc que cette vitesse augmente pour que, le couple étant supposé constant, les masselottes dudit module 180 suivant parviennent à faire passer celui-ci en prise pour que le dispositif fonctionne selon un troisième rapport, qui est un rapport de prise directe.

Si le couple sur l'arbre d'entrée 7 dépasse le seuil défini conjointement par les ressorts 158 et les quelques masselottes 169 du module 140, celui-ci se met à fonctionner en réducteur et on disposera alors de quatre rapports relativement "courts" en usage sportif au lieu de trois rapports relativement longs en conduite paisible. Le rôle des masselottes 169 du module 140 est de faire augmenter en fonction croissante de la vitesse de rotation du moteur le seuil de couple à partir duquel le module 140 passe du fonctionnement en prise directe au fonctionnement en réducteur. Ce seuil est indiqué par le trait mixte 181 sur la figure 4.

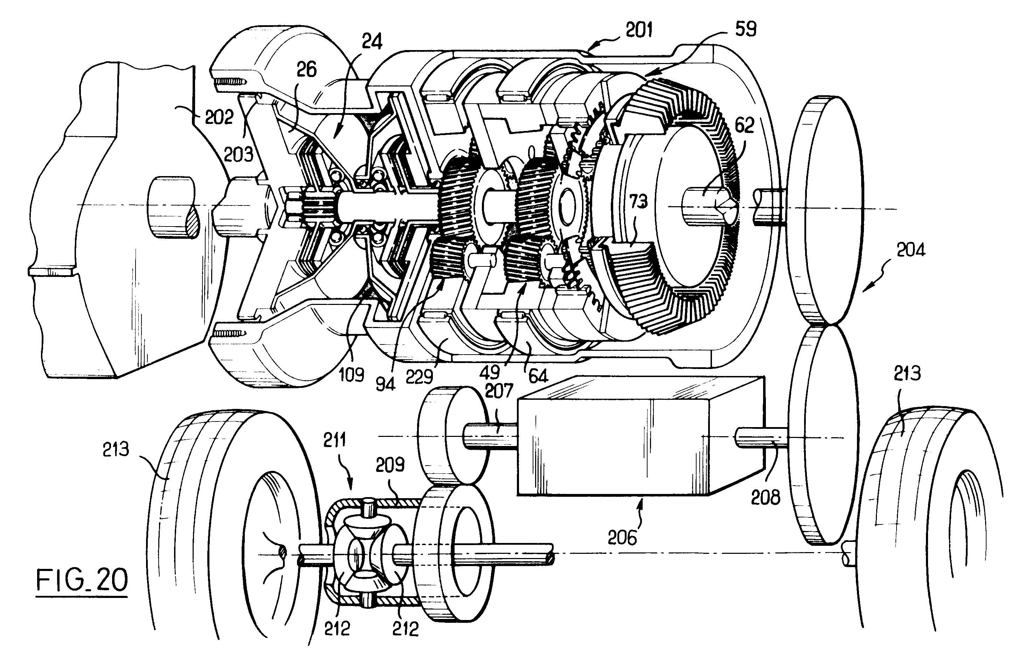

L'exemple représenté aux figures 20 à 25 ne sera décrit qu'en ce qui concerne ses différences par rapport à celui de la figure 8. Les éléments homologues sont munis des mêmes numéros de référence.

La figure 20 montre de manière schématique l'implantation de la transmission 201 à la sortie d'un moteur thermique 202, le plateau moteur 26 de l'embrayage centrifuge d'entrée 24 étant constitué par le volant moteur du moteur thermique 202, avec sa denture 203 pour l'engrènement du démarreur.

L'arbre de sortie 62 de la transmission 201 est relié par un couple de pignons 204 à un dispositif de marche arrière 206 permettant d'inverser sélectivement le sens de rotation de son arbre de sortie 207 par rapport à celui, toujours identique, de son arbre d'entrée 208. Le mouvement de l'arbre de sortie 207 du dispositif de marche arrière 206 est transmis par engrènement à la cage 209 d'un différentiel classique 211 dont les planétaires 212 sont, toujours de manière classique, reliés chacun à l'une de deux roues motrices 213 d'un véhicule.

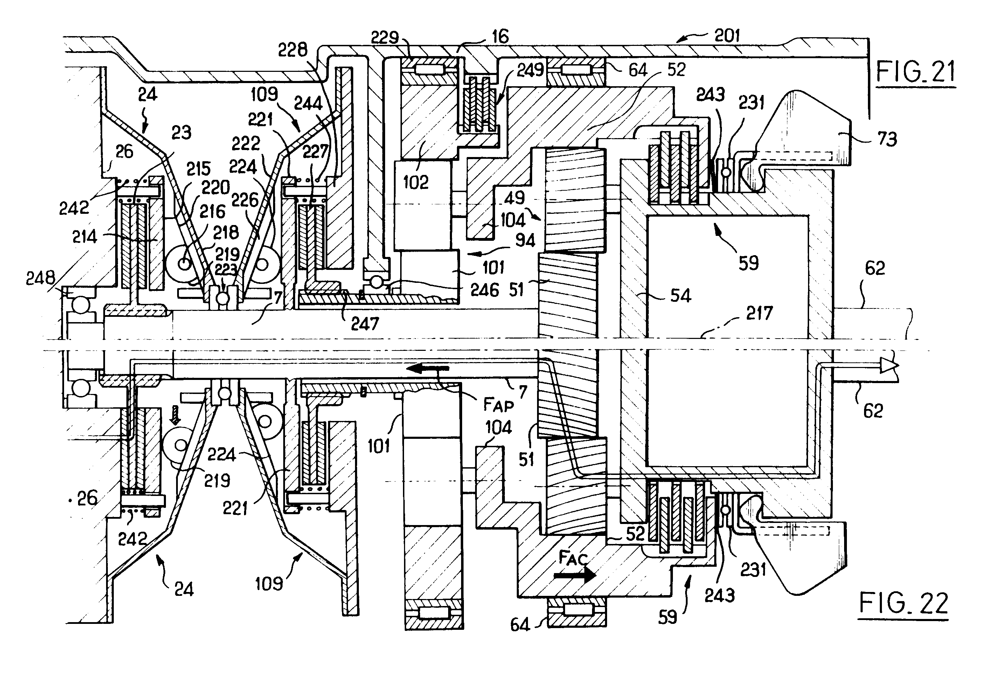

Comme le montre la figure 21, le plateau récepteur 23 de l'embrayage centrifuge 24 est constitué par un disque dont les deux faces sont munies de garnitures de friction et qui est susceptible d'être pincé entre le plateau moteur 26 et un disque presseur 214 à l'encontre de l'action des ressorts de rappel 242. Des galets cylindriques 219 sont montés pour rouler selon une direction radiale sur la face 215 du disque presseur 214 opposée au plateau 23. Chaque extrémité de l'axe 216 de chaque galet 219 roule sur une rampe 220 portée par une face conique intérieure d'une cloche 218 solidaire du plateau moteur 26. La distance entre les rampes 220 et la face 215 diminue lorsqu'on s'éloigne de l'axe 217 de la transmission. De plus, ces galets 219 sont réalisés massifs et la force centrifuge résultant de leur rotation avec la cloche 218 tend à les déplacer radialement vers l'extérieur en pressant le disque presseur 214 contre le plateau récepteur 23 et le plateau récepteur 23 contre le plateau moteur 26 à l'encontre de l'action des ressorts 242, ce qui réalise l'embrayage par friction entre le plateau moteur 26 et l'arbre 7. Cette situation est représentée à la figure 22.

L'arbre 7 est solidaire d'une part du planétaire 51 du train planétaire 49 et d'autre part d'un disque presseur 221 de l'embrayage 109. Le sens d'inclinaison de la denture hélicoïdale du planétaire 51 est tel que la force axiale F_{AP} (figure 22) engendrée par cette denture est dirigée vers la gauche des figures dans le sens desserrant le disque presseur 221, c'est-à-dire tendant à placer l'embrayage 109 à l'état désaccouplé.

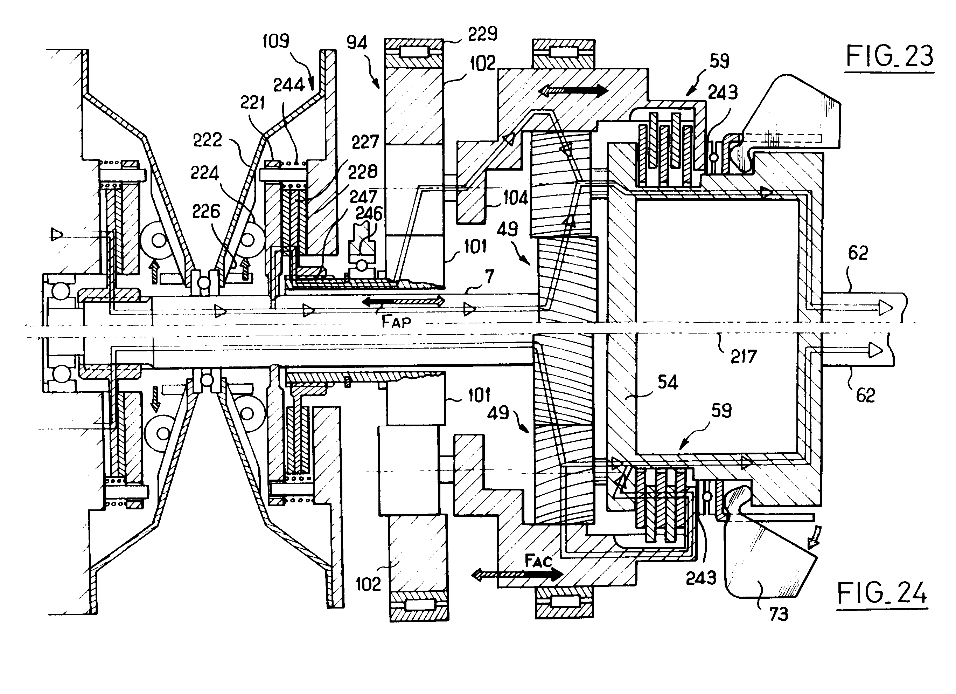

L'embrayage 109 est de type centrifuge, et sa structure est semblable à celle de l'embrayage d'entrée 24. Toutefois, la cloche 222 est montée folle en rotation autour de l'arbre 7 tout en étant appuyée axialement contre la cloche 218, par rapport à laquelle elle est montée en opposition, au moyen d'une butée à roulement 223 qui supporte la composante axiale engendrée sur la cloche 222 par les galets massifs 224 lorsqu'ils sont soumis à la force centrifuge. Lorsque la force centrifuge des galets 224 est suffisante, ils se déplacent radialement vers l'extérieur le long des rampes 226 en poussant axialement le disque presseur 221 à l'encontre de la force de rappel des ressorts 244 et de la force axiale F_{AP}, comme le montre la figure 23 où les flèches noires désignent des forces dues aux dentures hélicoïdales et les flèches hachurées des forces dues à une action centrifuge.

Lorsque l'embrayage 109 est à l'état serré, son plateau récepteur 227 est pincé entre le disque presseur 221 et un plateau de contre-appui 228 solidaire de la cloche 222. Le plateau récepteur 227 est lié en rotation au planétaire 101 du train épicycloïdal 94. Le porte-satellites 104 du train 94 est solidaire de la couronne 52 du train 49. Une roue libre 229 empêche la couronne 102 de tourner en sens rétrograde. Un palier 246 immobilise axialement la roue planétaire 101.

Les masselottes 73, entraînées en rotation par le porte-satellites 54 du train planétaire 49, tendent par leur force centrifuge lors de la rotation de l'arbre de sortie 62 à pousser axialement la couronne 52, par l'intermédiaire d'une butée 231 et d'un moyen élastique tel qu'une rondelle Belleville 243, dans un sens tendant à serrer l'embrayage 59. Au contraire, la force axiale F_{AC} engendrée par la denture hélicoïdale de la couronne 52 lorsque celle-ci travaille pour transmettre un couple dans le sens direct depuis l'arbre 7 vers la sortie 62 tend à desserrer l'embrayage 59.

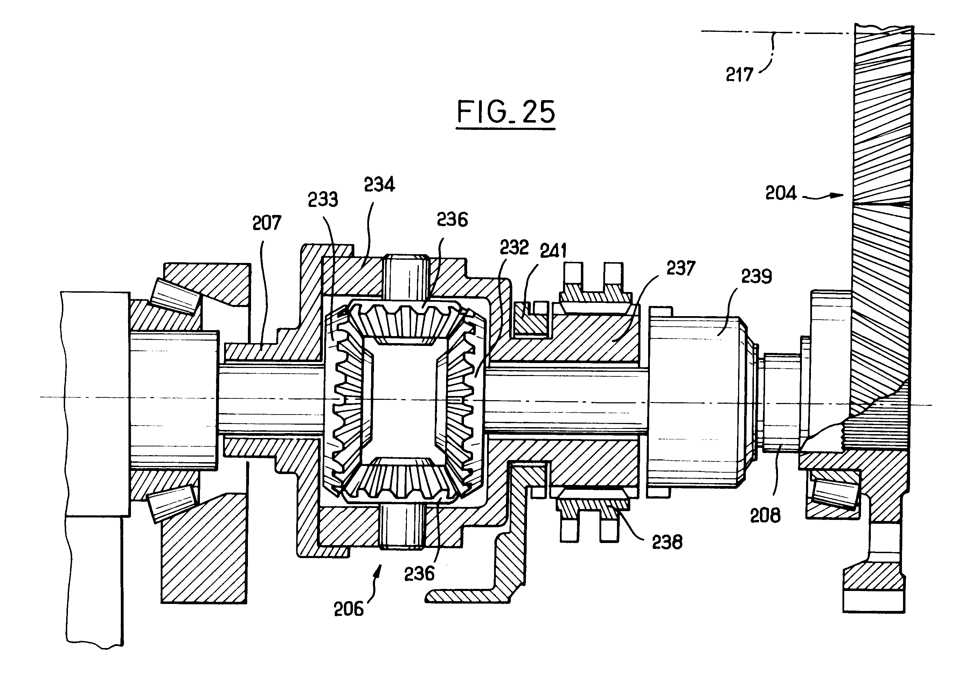

Le dispositif de marche arrière 63 de la figure 8 est reporté à l'extérieur de la transmission 201 telle qu'elle vient d'être décrite : c'est le dispositif de marche arrière 206 de la figure 20. Celui-ci est représenté de manière plus détaillée à la figure 25. Il comprend un mécanisme du type différentiel dont deux planétaires opposés 232 et 233 sont reliés l'un à l'arbre d'entrée 208 du dispositif et l'autre à son arbre de sortie 209. Une cage 234 du mécanisme différentiel, qui supporte en rotation deux satellites 236 engrenant chacun avec les deux planétaires 232 et 233, est solidaire d'une bague cannelée 237 sur laquelle un baladeur 238 est en prise de cannelure. Le baladeur 238 est relié à une commande manuelle non représentée pour être poussé sélectivement vers la droite de la figure pour accoupler la bague 237 avec une bague cannelée 239 solidaire de l'arbre d'entrée 208, de façon à faire fonctionner tout le mécanisme en prise directe, ou au contraire pour pousser le baladeur 238 vers la gauche de la figure en prise avec une bague cannelée 241. Dans ce dernier cas, la cage 234 est immobilisée et les satellites 236 fonctionnent en inverseur de mouvement entre le planétaire d'entrée 232 et le planétaire de sortie 233.

On va maintenant expliquer le fonctionnement du mode de réalisation des figures 20 à 25.

Lorsque le moteur est à l'arrêt ou tourne au ralenti, la situation est celle représentée à la figure 21. La force centrifuge à laquelle sont soumis les galets 219 de l'embrayage 24 est insuffisante pour surmonter la force de rappel des ressorts 242 de sorte que l'embrayage 24 est desserré et l'arbre 7 immobile si les roues du véhicule sont elles-mêmes immobiles. Les masselottes 73 ne produisent aucune force centrifuge car l'arbre 62 est immobile, mais la rondelle Belleville 243 maintient l'embrayage 59 à l'état serré. L'embrayage 109 est au contraire maintenu à l'état desserré par ses ressorts 244, puisque, l'arbre 7 étant immobile, les galets 224 ne sont soumis à aucune force centrifuge.

Si la vitesse de rotation du plateau 26 augmente, les galets 219 serrent l'embrayage 24 à l'encontre de la force des ressorts de rappel 242 et l'arbre 7 est progressivement entraîné en rotation (figure 22). Le couple transmis au planétaire 51 tend à faire tourner la couronne 52 en inverse. Ceci fait naître dans la couronne 52 une force axiale F_{AC} qui desserre l'embrayage 59 à l'encontre de l'action de la rondelle Belleville 243, qui s'aplatit. Par conséquent, la couronne 52 est désolidarisée du porte-satellites 54 et immobilisée par la roue libre 64. Le mouvement est transmis avec une forte démultiplication de vitesse et une forte multiplication de couple (par exemple dans un rapport 4) entre le plateau moteur 26 et l'arbre 62. La flèche sinueuse en double trait symbolise le trajet de l'énergie dans la transmission. Le planétaire 51 produit une force axiale F_{AP}, opposée à la force F_{AC}. La force F_{AP} pousse le plateau presseur 221 dans le sens du desserrage de l'embrayage 109 à l'encontre de l'action des galets 224 soumis à la force centrifuge due à la rotation de l'arbre 7 avec lequel ils sont liés en rotation autour de l'axe du mécanisme. Comme l'embrayage 109 est desserré et le porte-satellites 104 est immobile, le planétaire 101 du train planétaire 94 est immobile.

Lorsque la vitesse de rotation de l'arbre 7 devient telle, par rapport au couple à transmettre, que la force centrifuge des galets 224 surmonte la force axiale F_{AP} engendrée par la denture hélicoïdale du planétaire 51, il y a serrage de l'embrayage 109 et par conséquent rotation du planétaire 101 à la même vitesse que l'arbre 7. Comme la couronne 102 est empêchée de tourner en sens rétrograde par la roue libre 229, la rotation du planétaire 101 entraîne une rotation à vitesse réduite du porte-satellites 104 et de la couronne 52 en sens direct, et ceci établit un nouveau rapport de réduction de vitesse entre l'arbre 7 et l'arbre 62 d'entraînement des roues du véhicule. Ce deuxième rapport, par exemple égal à 1,7 , correspond à une moindre démultiplication de la vitesse et à une moindre augmentation du couple entre l'arbre 7 et l'arbre 62.

Le train planétaire 94 peut être à denture hélicoïdale pour supprimer son bruit de fonctionnement. Toutefois, la force axiale qui prendrait alors naissance dans le planétaire 101 lors du fonctionnement selon le deuxième rapport est supportée par le palier 246. La liaison par cannelures 247 entre le planétaire 101 et le disque 227 de l'embrayage 109 permet au disque 227 de se déplacer axialement par rapport au planétaire 101 maintenu immobile.

Comme le montre la figure 24, lorsque l'arbre 62 atteint une certaine vitesse de rotation, qui varie selon le couple à transmettre, les masselottes 73 parviennent à s'écarter de l'axe 217 du mécanisme malgré l'action contraire de la force axiale F_{AC}. En s'écartant de l'axe 217, les masselottes 73 provoquent le serrage de l'embrayage 59 et réalisent par conséquent la prise directe dans le train planétaire 49. La couronne 52 tourne alors à la même vitesse que le porte-satellites 54 et que l'arbre 7, et donc à la même vitesse que le planétaire 101, de sorte que la couronne 102 doit également tourner à la même vitesse, et l'ensemble tourne d'un seul bloc. Le rapport de transmission est donc égal à 1.

En fonctionnement en retenue, le sens du couple à transmettre s'inverse car le moteur fonctionne en frein. Dans cette situation, qui n'est pas représentée spécifiquement, la force F_{AC} dans la couronne 52 est dirigée vers la gauche des figures 21 à 24 et serre l'embrayage 59 avec l'aide de la rondelle Belleville 243. L'arbre 7 tourne donc au moins aussi vite que l'arbre 62. Si une roue libre 248 est placée entre l'arbre 7 et le plateau 26 pour interdire à l'arbre 7 de tourner plus vite que le plateau 26, on est certain que la vitesse de rotation du moteur ne peut pas être inférieure à celle de l'arbre 62. On peut prévoir un moyen 249 (figure 21) pour appliquer un freinage taré à la couronne 102 pour faire fonctionner la boîte de vitesses selon le deuxième rapport lorsque la force des masselottes 73 diminue et permet à l'embrayage 59 de patiner. On introduit ainsi dans les embrayages 59 et 109 des frottements produisant un freinage supplémentaire, ce qui est souhaité lors du fonctionnement de la transmission en retenue. Le frein 249 peut par exemple être actionné lorsque les freins du véhicule sont eux-mêmes actionnés.

Bien entendu, l'invention n'est pas limitée aux exemples décrits et représentés, et on peut combiner entre eux de manière différente les différents systèmes décrits.

On peut encore, par exemple, installer un dispositif selon la figure 5 à l'entrée d'une boîte de vitesses à commande manuelle.

## Revendications

1. Dispositif de transmission dans lequel au moins un mécanisme de transmission à au moins deux rapports de transmission comprend :
- un élément de bâti (16, 156) ;
- un élément d'entrée (7) ;
- un élément de sortie (4 ; 62) ;
- des éléments de transfert de puissance (1, 3) entre l'élément d'entrée et l'élément de sortie, ces éléments de transfert comprenant au moins une combinaison d'engrenage à roues dentées hélicoïdales (5, 49, 94, 139) ;
- des moyens (9, 59, 109, 119, 149) d'accouplement sélectif entre certains au moins desdits éléments, pour réaliser deux rapports de transmission différents selon que ces moyens d'accouplement sélectif sont à l'état accouplé ou à l'état désaccouplé ;
- des moyens sensibles au couple transmis, qui comprennent un montage à coulissement axial mutuel entre deux roues dentées hélicoïdales de la combinaison (1, 2, 51, 52, 101, 102, 141, 142) qui subissent des forces axiales opposées (F_{AP}, F_{AC}) en fonction du couple qu'elles transmettent par leur engrènement dans la combinaison, et des moyens (17, 57, 82, 83, 162) pour transmettre le déplacement axial mutuel de ces deux roues dentées au moins indirectement aux moyens d'accouplement (9, 59, 109, 119, 149) pour piloter ceux-ci, les moyens d'accouplement étant soumis au moins dans l'état désaccouplé aux effets contraires des moyens sensibles au couple transmis et d'un moyen de sollicitation antagoniste, (18, 73, 89, 169, 224) ;
- des moyens du type roue libre (14, 64, 154, 229) montés fonctionnellement entre l'élément de bâti (16, 156) et un élément de réaction (1, 51, 141, 52, 102) qui appartient auxdits éléments de transfert de puissance et peut tourner par rapport à l'élément d'entrée et l'élément de sortie, pour empêcher l'élément de réaction de tourner en sens rétrograde lorsque les moyens d'accouplement sont à l'état désaccouplé,
la combinaison d'engrenage étant différemment activée selon que les moyens d'accouplement sont à l'état accouplé ou désaccouplé, de façon que lors d'un changement de rapport ladite force axiale varie dans le sens stabilisant le rapport nouvellement en service, caractérisé en ce que les moyens d'accouplement (9, 59, 109, 119, 149) ont une capacité de transmission de couple limitée correspondant à un certain seuil, le passage de l'état accouplé à l'état désaccouplé étant déclenché par le fait que le couple à transmettre dépasse ledit seuil.

2. Dispositif de transmission selon la revendication 1, caractérisé en ce que la capacité de transmission de couple des moyens d'accouplement (9, 59, 109, 119, 149) augmente avec la force axiale qui leur est appliquée.

3. Dispositif de transmission selon la revendication 1 ou 2, dans lequel le moyen de sollicitation antagoniste (18, 73, 89, 169, 224) sollicite les moyens d'accouplement (9, 59, 119, 149) vers leur état accouplé, caractérisé en ce qu'à l'état accouplé les moyens d'accouplement (9, 59, 119, 149) court-circuitent mécaniquement la relation d'engrènement entre lesdites deux roues dentées hélicoïdales (1, 2, 51, 52, 141, 142) de la combinaison.

4. Dispositif de transmission selon l'une des revendications 1 à 3, caractérisé en ce que les moyens d'accouplement (9, 59, 109, 149) sont à friction.

5. Dispositif de transmission selon l'une des revendications 1 à 4, caractérisé en ce que ledit au moins un mécanisme de transmission est monté en mécanisme d'entrée (133, 140) entre l'élément d'entrée (7) et un élément de transfert intermédiaire (12, 12a), en ce que le moyen de sollicitation antagoniste sollicite le moyen d'accouplement vers son état correspondant au plus élevé des deux rapports de transmission, et en ce que le dispositif de transmission comprend en outre au moins un second mécanisme de transmission (136, 180) monté entre l'élément de transfert intermédiaire (12, 12a) et l'élément de sortie (62) et possédant des moyens sensibles à un couple de rotation et à une vitesse de rotation qu'il transmet pour sélectionner automatiquement un rapport de transmission relativement bas lorsque le couple de rotation est relativement élevé et/ou la vitesse de rotation relativement faible, et un rapport de transmission relativement élevé dans le cas contraire.

6. Dispositif de transmission selon l'une des revendications 1 à 4, caractérisé en ce qu'il comprend deux mécanismes de transmission (133, 136 ; 140, 180) précités, l'un (133, 140) monté en mécanisme d'entrée entre l'élément d'entrée (7) et un élément de transfert intermédiaire (12, 12a) et dans lequel les moyens de sollicitation antagonistes (18 ; 158) produisent une force sensiblement constante pour solliciter le moyen d'accouplement vers son état correspondant à un rapport de transmission relativement élevé, l'autre (136, 180) monté entre l'élément de transfert intermédiaire (12, 12a) et l'élément de sortie (62) et dans lequel les moyens de sollicitation antagoniste produisent une force croissant avec une vitesse de rotation dans le second mécanisme pour solliciter les moyens d'accouplement vers un état correspondant à un rapport de transmission relativement élevé dans le second mécanisme.

7. Dispositif de transmission selon la revendication 5 ou 6, caractérisé en ce que les moyens de sollicitation antagoniste du mécanisme d'entrée comprennent des moyens élastiques (18, 158).

8. Dispositif de transmission selon la revendication 7, caractérisé en ce que les moyens de sollicitation antagoniste du mécanisme d'entrée comprennent des moyens tachymétriques (169) montés en parallèle avec les moyens élastiques (158).

9. Dispositif de transmission selon l'une des revendications 1 à 5, caractérisé en ce que les moyens de sollicitation antagoniste comprennent un moyen tachymétrique produisant une force qui varie en fonction d'une vitesse de rotation dans le mécanisme de transmission.

10. Dispositif de transmission dans lequel au moins un mécanisme de transmission à au moins deux rapports de transmission comprend :
- un élément de bâti (16, 156) ;
- un élément d'entrée (7) ;
- un élément de sortie (62) ;
- des éléments de transfert de puissance entre l'élément d'entrée et l'élément de sortie, ces éléments de transfert comprenant au moins une combinaison d'engrenage à roues dentées hélicoïdales (49, 94, 139) ;
- des moyens (59, 109, 119, 149) d'accouplement sélectif entre certains au moins desdits éléments, pour réaliser deux rapports de transmission différents selon que ces moyens d'accouplement sélectif sont à l'état accouplé ou à l'état désaccouplé ;
- des moyens sensibles au couple transmis, qui comprennent un montage à coulissement axial mutuel entre deux roues dentées hélicoïdales de la combinaison (51, 52, 101, 102, 141, 142) qui subissent des forces axiales opposées (F_{AP}, F_{AC}) en fonction du couple qu'elles transmettent par leur engrènement dans la combinaison, et des moyens (57, 82, 83, 162) pour transmettre le déplacement axial mutuel de ces deux roues dentées au moins indirectement aux moyens d'accouplement (59, 109, 119, 149) pour piloter ceux-ci,
caractérisé en ce que les moyens d'accouplement sont soumis aux effets contraires desdits moyens sensibles au couple transmis et d'un moyen de sollicitation antagoniste de type tachymétrique (73, 89, 169, 224) produisant une force qui varie en fonction d'une vitesse de rotation dans le dispositif de transmission.

11. Dispositif de transmission selon la revendication 9 ou 10, caractérisé en ce que le moyen de sollicitation antagoniste est un moyen de type centrifuge qui est entraîné à ladite vitesse de rotation pour produire une force centrifuge qui est au moins indirectement transmise aux moyens d'accouplement pour avoir sur eux une action contraire à celle desdites forces axiales.

12. Dispositif de transmission selon l'une des revendications 9 à 11, caractérisé par un moyen élastique (243) monté entre le moyen tachymétrique (73) et les moyens d'accouplement (59).

13. Dispositif de transmission selon l'une des revendications 9 à 12, caractérisé en ce que l'élément d'entrée (7) est lié au plateau récepteur (23) d'un embrayage centrifuge (24) du dispositif de transmission.

14. Dispositif selon la revendication 13, caractérisé en ce que le plateau récepteur (23) est lui-même lié en rotation avec un système centrifuge (34, 36) monté pour réaliser un accouplement entre le plateau récepteur (23) et un plateau moteur (26) de l'embrayage centrifuge lorsque la vitesse du plateau récepteur excède un certain seuil.

15. Dispositif de transmission selon l'une des revendications 10 à 14, caractérisé en ce que ladite combinaison d'engrenage (49, 139) est différemment activée pour réaliser l'un et l'autre des deux rapports précités, de façon que lors d'un changement de rapport, ladite force axiale varie dans le sens stabilisant le rapport nouvellement en service.

16. Dispositif de transmission selon l'une des revendications 10 à 15, caractérisé en ce que ledit mécanisme de transmission (136, 180) est monté fonctionnellement entre un élément de transfert intermédiaire (12, 12a) et l'élément de sortie (62), l'ensemble de transmission comprenant en outre un mécanisme d'entrée (133, 140) à au moins deux rapports, monté fonctionnellement entre l'élément d'entrée (7) et l'élément de transfert intermédiaire (12).

17. Dispositif de transmission selon la revendication 16, caractérisé en ce que le mécanisme d'entrée (133, 140) est sensible au couple sur l'élément d'entrée (7) pour passer automatiquement à un rapport de transmission relativement bas lorsque le couple sur l'élément d'entrée excède un seuil haut, et un rapport de transmission relativement élevé lorsque le couple sur l'élément d'entrée redescend en dessous d'un seuil bas.

18. Dispositif de transmission selon la revendication 17, caractérisé par des moyens (169) pour faire légèrement croître le seuil haut (181) avec la vitesse de rotation de l'élément d'entrée.

19. Dispositif de transmission selon l'une des revendications 1 à 18, caractérisé en ce que le moyen de sollicitation antagoniste (73, 169) est monté pour commander les moyens d'accouplement sélectif (59, 149) de façon que le dispositif de transmission passe d'un rapport relativement faible à un rapport plus élevé lorsque la force axiale qu'il engendre excède la force axiale engendrée par ladite roue dentée hélicoïdale.

20. Dispositif de transmission selon la revendication 19, caractérisé en ce que le moyen d'accouplement est sollicité par le moyen de sollicitation antagoniste vers un état de prise directe qui décharge les dentures des deux roues dentées hélicoïdales (142) et annule ainsi lesdites forces axiales opposées (F_{AP}, F_{AC}) jusqu'à ce que le couple dépasse la capacité de transmission de l'embrayage et provoque la réapparition de la force axiale, laquelle accélère le retour au rapport relativement faible.

21. Dispositif de transmission selon l'une des revendications 10 à 20, caractérisé par des moyens de butée axiale (57, 157, 112, 86) permettant aux deux roues dentées hélicoïdales de s'appuyer axialement l'une contre l'autre dans le sens contraire à leur déplacement mutuel sous l'action des forces axiales (F_{AP}, F_{AC}) qui apparaissent lors de la transmission d'un couple moteur sur l'élément d'entrée (7).

22. Dispositif de transmission selon l'une des revendications 1 à 21, caractérisé en ce que les moyens d'accouplement comprennent un dispositif à friction (9, 59, 149) mobile entre une position désaccouplée pour laquelle le rapport de transmission est relativement bas et lesdites roues dentées à déplacement mutuel axial transmettent un couple par engrènement, et une position accouplée pour laquelle le rapport de transmission est plus élevé tandis que le couple transmis par engrènement des roues dentées à déplacement axial mutuel est au moins en partie annulé, et en ce que les roues dentées à déplacement axial mutuel sont montées pour commander par leur force axiale le maintien sélectif du dispositif à friction (9, 59, 149) en position désaccouplée à l'encontre de l'action du moyen de sollicitation antagoniste (73, 169).

23. Dispositif de transmission selon l'une des revendications 1 à 22, caractérisé en ce qu'il comprend entre l'élément d'entrée (7) et l'élément de sortie (62) une succession de plusieurs dispositifs de transmission précités sous forme de modules (180) à deux rapports ayant chacun comme moyen de sollicitation antagoniste un moyen tachymétrique sensible à la vitesse de rotation de l'un des éléments du modules (7, 12a, 12b) pour faire passer le module du rapport inférieur au rapport supérieur à l'encontre de la force axiale (F_{AC}, F_{AP}) de deux roues dentées hélicoïdales (141, 142) d'une combinaison d'engrenage à roues dentées hélicoïdales (139) de chaque module.

24. Dispositif de transmission selon la revendication 23, caractérisé en ce que les modules précités (180) sont précédés par un module (140) dans lequel le moyen de sollicitation antagoniste est essentiellement un moyen de rappel (158) qui tend à mettre le module (140) en prise directe tant que le couple à l'entrée est inférieur à un seuil (181).

25. Dispositif de transmission selon l'une des revendications 10 à 12, caractérisé en ce que la combinaison d'engrenage (49) est montée fonctionnellement entre l'élément d'entrée (7) et un dispositif d'accouplement par friction (119) constituant au moins en partie les moyens d'accouplement sélectif précités, les deux roues dentées (51, 52) de la combinaison étant montées pour que leur force axiale (F_{AC}, F_{AP}) tende à serrer le dispositif d'accouplement par friction (119) et réaliser ainsi un premier rapport de transmission, des moyens étant prévus pour amorcer la friction dans le dispositif d'accouplement par friction, et le moyen tachymétrique (89) étant agencé pour desserrer sélectivement le dispositif d'accouplement par friction (119) et activer un autre accouplement (109) pour réaliser un deuxième rapport de transmission.

26. Dispositif selon la revendication 25, caractérisé en ce que les moyens pour amorcer la friction comprennent un bain d'huile dans lequel travaille le dispositif d'accouplement par friction (119).

27. Dispositif de transmission selon l'une des revendications 9 à 12, comprenant un premier train planétaire (49) à denture hélicoïdale et un deuxième train planétaire (94) caractérisé en ce qu'un arbre (7) du dispositif est :
a) solidaire d'un planétaire (51) du premier train (49) ;
b) solidaire d'un élément (227) d'accouplement sélectif entre l'arbre (7) et un planétaire (101) du deuxième train (94) ;
c) mobile axialement de façon que la force axiale (F_{AP}) engendrée par la denture hélicoïdale du planétaire (51) du premier train (49) tende à placer l'élément d'accouplement (227) en une position de désaccouplement du planétaire du deuxième train, à l'encontre du moyen de sollicitation antagoniste tachymétrique (224, 244) tendant à placer l'élément d'accouplement dans une position de transmission de puissance entre l'arbre (7) et une couronne (52) du premier train (49) à travers le deuxième train (94).

28. Dispositif de transmission selon la revendication 27, caractérisé en ce que le moyen de sollicitation antagoniste tachymétrique est sensible à la vitesse de rotation de l'arbre (7).

29. Dispositif de transmission selon la revendication 27 ou 28, caractérisé en ce que les couronnes (52, 102) des deux trains (49, 94) sont montées sur roue libre (64, 229).

30. Dispositif de transmission selon l'une des revendications 27 à 29, caractérisé en ce que les moyens d'accouplement sélectif comprennent un moyen d'accouplement sélectif pour mettre l'un (49) des deux trains (49, 94) en prise directe sous l'action d'un dispositif centrifuge (73) poussant axialement l'une des couronnes (52, 102) des deux trains (49, 94) à l'encontre de la force axiale (F_{AC}) engendrée par sa denture hélicoïdale.

31. Dispositif de transmission selon l'une des revendications 9 à 12, caractérisé en ce que le dispositif d'accouplement sélectif comprend un élément d'embrayage (221) solidaire d'un arbre mobile axialement (7) auquel est fixé l'une des roues dentées hélicoïdales (51) engendrant une force axiale, et le moyen tachymétrique comprend des galets massifs (224) montés pour être entraînés en rotation par l'arbre (7) entre l'élément d'embrayage (221) et une rampe (226) convergeant radialement vers l'extérieur avec l'élément d'embrayage, de manière que sous l'action de la force centrifuge les galets (224) tendant à se déplacer radialement vers l'extérieur poussent l'élément d'embrayage (221) en position d'accouplement à l'encontre de la force axiale.

## Claims

1. A transmission device wherein at least one transmission mechanism having at least two transmission ratios comprises :
- a casing element (16, 156) ;
- an input element (7) ;
- a output element (4 ; 62) ;
- power transfer elements (1, 3) between the input element and the output element, said transfer elements comprising at least one gear combination having helically toothed wheels (5, 49, 94, 139) ;
- selective coupling means (9, 59, 109, 119, 149) for providing selective coupling between at least some of said elements, for determining two different transmission ratios depending on whether said selective coupling means are in the coupled condition or in the uncoupled condition ;
- means responsive to the transmitted torque, which comprise a mutually and axially slidable arrangement between two helically toothed wheels of said combination (1, 2, 51, 52, 101, 102, 141, 142) which undergo opposite axial thrusts (F_{AP}, F_{AC}) as a function of the torque that they transmit by their meshing in the combination, and means (15, 57, 82, 83, 162) for transmitting the mutual axial displacement of said two toothed wheels at least indirectly to the coupling means (9, 59, 109, 119, 149) for controlling the latter, the coupling means being, at least in the uncoupled condition, subjected to the contrary effects of the means responsive to the transmitted torque and of an antagonistic urging means (18, 73, 89, 169, 224) ;
- means of the type of a free-wheel (14, 64, 154, 229), mounted operatively between the casing element (16, 156) and a reaction element (1, 51, 141, 52, 102) which belongs to said power transfer elements and can rotate with respect to the input element and the output element, for preventing the reaction element from rotating in reverse direction when the coupling means are in the uncoupled condition,
the gear combination being differently activated depending on whether the coupling means are in coupled or uncoupled condition, whereby during a ratio-change said axial thrust varies in the direction stabilizing the newly prevailing ratio, characterised in that the coupling means (9, 59, 109, 119, 149) have a limited torque transmission capability corresponding to a certain threshold, transition from the coupled condition to the uncoupled condition being initiated by the fact that the torque to be transmitted exceeds said threshold.

2. A transmission device according to claim 1, characterised in that the torque transmission capability of the coupling means (9, 59, 109, 119, 149) increases with the axial thrust applied thereto.

3. A transmission device according to claim 1 or 2, wherein the antagonistic urging means (18, 73, 89, 169, 224) urges the coupling means (9, 59, 119, 149) towards the coupled condition, characterised in that in the coupled condition the coupling means (9, 59, 119, 149) mechanically bypass the meshing relationship between said two helically toothed wheels (1, 2, 51, 52, 141, 142) of the combination.

4. A transmission device according to one of claims 1-3, characterised in that the coupling means (9, 59, 109, 149) are friction means.

5. A transmission device according to one of claims 1-4, characterised in that said at least one transmission mechanism is mounted as an input mechanism (133, 140) between the input element (7) and an intermediate transfer element (12, 12a), in that the antagonistic urging means urges the coupling means towards its condition corresponding to the higher of said two transmission ratios, and in that the transmission device moreover comprises at least one second transmission mechanism (136, 180) mounted between the intermediate transfer element (12, 12a) and the output element (62) and having means responsive to torque and to a rotating speed that it transmits for automatically selecting a relatively low transmission ratio when the torque is relatively high and/or the rotating speed relatively low, and a relatively high transmission ratio in the contrary case.

6. A transmission device according to one of claims 1-4, characterised in that it comprises two said transmission mechanisms (133, 136 ; 140, 180), one (133, 140) being mounted as an input mechanism between the input element (7) and an intermediate transfer element (12, 12a) and in which the antagonistic urging means (18 ; 158) produce a substantially constant thrust for urging the coupling means towards its condition corresponding to a relatively high transmission ratio, the other (136, 180) being mounted between the intermediate transfer element (12, 12a) and the output element (62) and in which the antagonistic urging means produce a thrust increasing with a rotating speed in the second mechanism for urging the coupling means towards a condition corresponding to a relatively high transmission ratio in the second mechanism.

7. A transmission device according to claim 5 or 6, characterised in that the antagonistic urging means of the input mechanism comprise resilient means (18, 158).

8. A transmission device according to claim 7, characterised in that the antagonistic urging means of the input mechanism comprise tachometric means (169) mounted in parallel with the resilient means (158).

9. A transmission device according to one of claims 1-5, characterised in that the antagonistic urging means comprise a tachometric means producing a thrust which varies as a function of a rotating speed in the transmission mechanism.

10. A transmission device wherein at least one transmission mechanism having at least two transmission ratios comprises :
- a casing element (16, 156) ;
- an input element (7) ;
- a output element (62) ;
- power transfer elements between the input element and the output element, said transfer elements comprising at least one gear combination having helically toothed wheels (49, 94, 139) ;
- selective coupling means (59, 109, 119, 149) for providing selective coupling between at least some of said elements, for determining two different transmission ratios depending on whether said selective coupling means are in the coupled condition or in the uncoupled condition ;
- means responsive to the transmitted torque, which comprise a mutually and axially slidable arrangement between two helically toothed wheels of said combination (51, 52, 101, 102, 141, 142) which undergo opposite axial thrusts (F_{AP}, F_{AC}) as a function of the torque that they transmit by their meshing in the combination, and means (57, 82, 83, 162) for transmitting the mutual axial displacement of said two toothed wheels at least indirectly to the coupling means (9, 59, 109, 119, 149) for controlling the latter,
characterised in that the coupling means are subjected to the contrary effects of said means responsive to the transmitted torque and of an antagonistic urging means being of a tachometric type (73, 89, 169, 224) producing a thrust which varies as function of a rotating speed in the transmission device.

11. A transmission device according to claim 9 or 10, characterised in that the antagonistic urging means is a means of the centrifugal type which is driven at said rotating speed for producing a centrifugal force which is at least indirectly transmitted to the coupling means for having thereon an action contrary to that of said axial thrust.

12. A transmission device according to one of claims 9-11, characterised by resilient means (243) mounted between the tachometric means (73) and the coupling means (59).

13. A transmission device according to one of claims 9-12, characterised in that the input element (7) is connected to the driven plate (23) of a centrifugal clutch (24) of the transmission device.

14. A device according to claim 13, characterised in that the driven plate (23) is itself connected for common rotation with a centrifugal system (34, 36) mounted for performing a coupling between the driven plate (23) and a driving plate (26) of the centrifugal clutch when the speed of the driven plate exceeds a certain threshold.

15. A transmission device according to one of claims 10-14, characterised in that said gear combination (49, 139) is differently activated for establishing one and the other of the two said ratios, whereby during a ratio change said axial thrust varies in the direction stabilising the newly established ratio.

16. A transmission device according to one of claims 10-15, characterised in that said transmission mechanism (136, 180) is mounted operatively between an intermediate transfer element (12, 12a) and the output element (62), the transmission assembly moreover comprising an input mechanism (133, 140) providing at least two ratios, and being mounted operatively between the input element (7) and the intermediate transfer element (12).

17. A transmission device according to claim 16, characterised in that the input mechanism (133, 140) is responsive to the torque on the input element (7) for automatically shifting into a relatively low transmission ratio when the torque on the input element exceeds a high threshold, and a relatively high transmission ratio when the torque on the input element decreases back below a low threshold.

18. A transmission device according to claim 17, characterised by means (169) for slightly increasing the high threshold (181) with the rotating speed of the input element.

19. A transmission device according to one of claims 1-18, characterised in that the antagonistic urging means (73, 169) is mounted for controlling the selective coupling means (59, 149) in such a way that the transmission device shifts from a relatively low ratio to a higher ratio when the axial thrust which it generates exceeds the axial thrust generated by said helically toothed wheel.

20. A transmission device according to claim 19, characterised in that the coupling means is urged by the antagonistic urging means towards a direct drive state which unloads the teeth of both helically toothed wheels (142) and thereby cancels said opposite axial thrusts (F_{AP}, F_{AC}) until the torque exceeds the transmission capability of the clutch and causes reappearing of the axial thrust, which expedites re-establishment of the relatively low ratio.

21. A transmission device according to anyone of claims 10-20, characterised by thrust bearing means (57, 157, 112, 86) allowing both helically toothed wheels to axially bear against each other in the direction contrary to their mutual displacement under action of the axial thrusts (F_{AP}, F_{AC}) which appear during transmission of a driving torque on the input element (7).

22. A transmission device according to one of claims 1-21, characterised in that the coupling means comprise a friction device (9, 59, 149) movable between an uncoupled position for which the transmission ratio is relatively low and said toothed wheels capable of an axial mutual displacement transmit a torque by meshing, and a coupled position for which the transmission ratio is higher whereas the torque transmitted by meshing of the mutually and axially displaceable toothed wheels is at least in part cancelled, and in that the mutually and axially displaceable toothed wheels are mounted for controlling by their axial thrust the selective keeping of the friction device (9, 59, 149) in the uncoupled position against the action of the antagonistic urging means (73, 169).

23. A transmission device according to one of claims 1-22, characterised in that it comprise between the input element (7) and the output element (62) a succession of several said transmission devices in the form of two-ratios modules (180) each having as the antagonistic urging means a tachometric means which is responsive to the speed of rotation of one of the elements of the module (7, 12a, 12b) for causing shifting of the module from the lower ratio into the higher ratio against the axial thrust (F_{AC}, F_{AP}) of two helically toothed wheels (141, 142) of a gear combination (139) of each module, said combinaition having helically toothed wheels.

24. A transmission device according to claim 23, characterised in that said modules (180) are preceeded by a module (140) in which the antagonistic urging means is essentially a biasing means (158) which tends to establish direct drive in the module (140) as long as the torque at the input is below a threshold (181).

25. A transmission device according to one of claims 10-12, characterised in that the gear combination (49) is mounted operatively between the input element (7) and a friction coupling device (119) embodying at least in part said selective coupling means, the two toothed wheels (51, 52) of the combination being mounted in such a way that their axial thrust (F_{AC}, F_{AP}) tends to clamp the friction coupling means (119) and to thereby cause a first transmission ratio to prevail, means being provided for initiating friction in the friction coupling means, and the tachometric means (89) being arranged for selectively releasing the friction coupling device (119) and activating another coupling (109) for causing a second transmission ratio to prevail.

26. A transmission device according to claim 25, characterised in that the means for initiating friction comprise and oil bath in which the friction coupling device (119) operates.

27. A transmission device according to one of claims 9-12, comprising a first planetary train (49) having helical teeth and a second planetary train (94) characterised in that a shaft (7) of the device is :
a) fast with a sun gear (51) of the first train (49) ;
b) fast with an element (227) for selective coupling between the shaft (7) and a sun gear (101) of the second train (94) ;
c) axially movable whereby the axial thrust (F_{AP}) generated by the helical teeth of the sun gear (51) of the first train (49) tends to position the coupling element (227) in a position in which the sun gear of the second train is uncoupled, against the tachometric antagonistic urging means (224, 244) which tends to position the coupling element in a position of power transmission between the shaft (7) and a ring gear (52) of the first train (49) through the second train (94).

28. A transmission device according to claim 27, characterised in that the tachometric antagonistic urging means is responsive to the speed of rotation of the shaft (7).

29. A transmission device according to claim 27 or 28, characterised in that the ring gear (52, 102) of both trains (49, 94) are mounted on free wheel (64, 229).

30. A transmission device according to one of claims 27-29, characterised in that the selective coupling means comprise a selective coupling means for establishing direct drive in one (49) of both train (49, 94) under the action of a centrifugal device (73) axially pushing one of the ring gears (52, 102) of both trains (49, 94) against the axial thrust (F_{AC}) generated by its helical toothing.

31. A transmission device according to one of claims 9-12, characterised in that the selective coupling means comprise a clutch element (221) which is fast with an axially movable shaft (7) to which one of the helically toothed wheels (51) generating an axial thrust is secured, and the tachometric means comprises solid rolls (224) mounted for being driven in rotation by the shaft (7) between the clutch element (221) and a slope (226) which radially outwardly converges with the clutch element, whereby under the action of the centrifugal force the rolls (224) tending to move radially outwardly push the clutch element (221) in the coupling position against the axial thrust.

## Patentansprüche

1. Getriebe, bei dem mindestens ein Getriebemechanismus mit mindestens zwei Übersetzungsverhältnissen umfaßt:
- ein Gehäuseteil (16, 156);
- ein Antriebselement (7);
- ein Abtriebselement (4; 62);
- Elemente zur Kraftübertragung (1, 3) zwischen dem Antriebselement und dem Abtriebselement, wobei diese Übertragungselemente mindestens eine Zahnradgetriebekombination mit Schrägverzahnung (5, 49, 94, 139) umfassen;
- Mittel (9, 59, 109, 119, 149) zur selektiven Kupplung zwischen mindestens einigen dieser Elemente, um zwei verschiedene Übersetzungsverhältnisse zu verwirklichen, je nachdem, ob sich diese selektiven Kupplungsmittel im gekuppelten oder entkuppelten Zustand befinden;
- Mittel, die für das übertragene Moment empfindlich sind und eine Anordnung mit gegenseitiger axialer Verschiebung zwischen zwei schrägverzahnten Zahnrädern der Kombination (1, 2, 51, 52, 101, 102, 141, 142), welche in Abhängigkeit von dem Moment, das sie durch ihren Zahneingriff in der Kombination übertragen, entgegengesetzten Axialkräften (F_{AP}, F_{AC}) ausgesetzt sind, sowie Mittel (17, 57, 82, 83, 162) umfassen, um die gegenseitige axiale Verschiebung dieser beiden Zahnräder zumindest indirekt auf die Kupplungsmittel (9, 59, 109, 119, 149) zwecks Steuerung derselben zu übertragen, wobei die Kupplungsmittel zumindest im entkuppelten Zustand den entgegengesetzten Wirkungen der für das übertragene Moment empfindlichen Mittel und eines Gegenbelastungsmittels (18, 73, 89, 169, 224) ausgesetzt sind;
- Mittel von der Art eines Freilaufs (14, 64, 154, 229), die funktionell zwischen dem Gehäuseteil (16, 156) und einem Gegenwirkungselement (1, 51, 141, 52, 102), das zu den Kraftübertragungselementen gehört und sich im Verhältnis zum Antriebselement und zum Abtriebselement drehen kann, montiert sind, um das Gegenwirkungselement daran zu hindern, sich in Rückwärtsrichtung zu drehen, wenn sich die Kupplungsmittel im entkuppelten Zustand befinden,
wobei die Zahnradgetriebekombination in verschiedener Weise betrieben wird, je nachdem, ob die Kupplungsmittel im gekuppelten oder entkuppelten Zustand sind, und zwar derart, daß sich bei einem Wechsel des Übersetzungsverhältnisses die genannte Axialkraft in die das neu geschaltete Übersetzungsverhältnis stabilisierende Richtung ändert, dadurch gekennzeichnet, daß die Kupplungsmittel (9, 59, 109, 119, 149) ein begrenztes Momentübertragungsvermögen aufweisen, das einem bestimmten Schwellenwert entspricht, wobei der Übergang vom gekuppelten Zustand in den entkuppelten Zustand dadurch ausgelöst wird, daß das zu übertragende Moment diesen Schwellenwert überschreitet.

2. Getriebe nach Anspruch 1, dadurch gekennzeichnet, daß das Momentübertragungsvermögen der Kupplungsmittel (9, 59, 109, 119, 149) mit der auf sie ausgeübten Axialkraft steigt.

3. Getriebe nach Anspruch 1 oder 2, bei dem das Gegenbelastungsmittel (18, 73, 89, 169, 224) die Kupplungsmittel (9, 59, 119, 149) in Richtung auf ihren gekuppelten Zustand belastet, dadurch gekennzeichnet, daß die Kupplungsmittel (9, 59, 119, 149) im gekuppelten Zustand die Zahneingriffverbindung zwischen den beiden schrägverzahnten Zahnrädern (1, 2, 51, 52, 141, 142) der Kombination mechanisch kurzschließen.

4. Getriebe nach einem der Ansprüche 1 bis 3, dadurch gekennzeichnet, daß die Kupplungsmittel (9, 59, 109, 149) Reibungskupplungsmittel sind.

5. Getriebe nach einem der Ansprüche 1 bis 4, dadurch gekennzeichnet, daß der mindestens eine Getriebemechanismus als Antriebsmechanismus (133, 140) zwischen dem Antriebselement (7) und einem Zwischenübertragungselement (12, 12a) montiert ist, daß das Gegenbelastungsmittel das Kupplungsmittel in Richtung auf seinen dem höheren der zwei Übersetzungsverhältnisse entsprechenden Zustand belastet, und daß das Getriebe außerdem mindestens einen zweiten Getriebemechanismus (136, 180) umfaßt, der zwischen dem Zwischenübertragungselement (12, 12a) und dem Abtriebselement (62) montiert ist und Mittel besitzt, die für ein Drehmoment und eine Drehgeschwindigkeit, die er überträgt, empfindlich sind, um automatisch ein relativ niedriges Übersetzungsverhältnis zu wählen, wenn das Drehmoment relativ groß ist und/oder die Drehgeschwindigkeit relativ gering ist, und ein relativ hohes Übersetzungsverhältnis im umgekehrten Falle.

6. Getriebe nach einem der Ansprüche 1 bis 4, dadurch gekennzeichnet, daß es die zwei vorgenannten Getriebemechanismen (133, 136; 140, 180) umfaßt, den einen (133, 140) als Antriebsmechanismus zwischen dem Antriebe element (7) und einem Zwischenübertragungselement (12, 12a) montierten, bei dem die Gegenbelastungsmittel (18; 158) eine im wesentlichen konstante Kraft erzeugen, um das Kupplungsmittel in Richtung auf seinen einem relativ hohen Übersetzungsverhältnis entsprechenden Zustand zu belasten, und den anderen (136, 180) zwischen dem Zwischenübertragungselement (12, 12a) und dem Abtriebselement (62) montierten, bei dem die Gegenbelastungsmittel eine mit einer Drehgeschwindigkeit in dem zweiten Mechanismus wachsende Kraft erzeugen, um die Kupplungsmittel in Richtung auf einen Zustand zu belasten, der einem relativ hohen Übersetzungsverhältnis in dem zweiten Mechanismus entspricht.

7. Getriebe nach Anspruch 5 oder 6, dadurch gekennzeichnet, daß die Gegenbelastungsmittel des Antriebsmechanismus elastische Mittel (18, 158) umfassen.

8. Getriebe nach Anspruch 7, dadurch gekennzeichnet, daß die Gegenbelastungsmittel des Antriebsmechanismus Drehzahlmeßmittel (169) umfassen, die parallel mit den elastischen Mitteln (158) montiert sind.

9. Getriebe nach einem der Ansprüche 1 bis 5, dadurch gekennzeichnet, daß die Gegenbelastungsmittel ein Drehzahlmeßmittel umfassen, welches eine Kraft erzeugt, die sich in Abhängigkeit von einer Drehgeschwindigkeit in dem Getriebemechanismus ändert.

10. Getriebe, bei dem mindestens ein Getriebemechanismus mit mindestens zwei Übersetzungsverhältnissen umfaßt:
- ein Gehäuseteil (16, 156);
- ein Antriebselement (7);
- ein Abtriebeelement (62);
- Elemente zur Kraftübertragung zwischen dem Antriebselement und dem Abtriebselement, wobei diese Übertragungselemente mindestens eine Zahnradgetriebekombination mit Schrägverzahnung (49, 94, 139) umfassen;
- Mittel (59, 109, 119, 149) zur selektiven Kupplung zwischen mindestens einigen dieser Elemente, um zwei verschiedene Übersetzungsverhältnisse zu verwirklichen, je nachdem, ob sich diese selektiven Kupplungsmittel im gekuppelten oder entkuppelten Zustand befinden;
- Mittel, die für das übertragene Moment empfindlich sind und eine Anordnung mit gegenseitiger axialer Verschiebung zwischen zwei schrägverzahnten Zahnrädern der Kombination (51, 52, 101, 102, 141, 142), welche in Abhängigkeit von dem Moment, das sie durch ihren Zahneingriff in der Kombination übertragen, entgegengesetzten Axialkräften (F_{AP}, F_{AC}) ausgesetzt sind, sowie Mittel (57, 82, 83, 162) umfassen, um die gegenseitige axiale Verschiebung dieser beiden Zahnräder zumindest indirekt auf die Kupplungsmittel (59, 109, 119, 149) zwecks Steuerung derselben zu übertragen,
dadurch gekennzeichnet, daß die Kupplungsmittel den entgegengesetzten Wirkungen der für das übertragene Moment empfindlichen Mittel und eines Gegenbelastungsmittels von der Art eines Drehzahlmessers (73, 89, 169, 224) ausgesetzt sind, das eine Kraft erzeugt, die sich in Abhängigkeit von einer Drehgeschwindigkeit in dem Getriebe ändert.

11. Getriebe nach Anspruch 9 oder 10, dadurch gekennzeichnet, daß das Gegenbelastungsmittel ein Mittel von Fliehkraftart ist, das mit der genannten Drehgeschwindigkeit angetrieben wird, um eine Zentrifugalkraft zu erzeugen, die zumindest indirekt auf die Kupplungsmittel übertragen wird, um auf diese eine Wirkung auszuüben, welche derjenigen der Axialkräfte entgegengesetzt ist.

12. Getriebe nach einem der Ansprüche 9 bis 11, gekennzeichnet durch ein elastisches Mittel (243), das zwischen dem Drehzahlmeßmittel (73) und den Kupplungsmitteln (59) montiert ist.

13. Getriebe nach einem der Ansprüche 9 bis 12, dadurch gekennzeichnet, daß das Antriebselement (7) mit der Empfangsplatte (23) einer Fliehkraftkupplung (24) des Getriebes verbunden ist.

14. Getriebe nach Anspruch 13, dadurch gekennzeichnet, daß die Empfangsplatte (23) ihrerseits drehfest mit einem Fliehkraftsystem (34, 36) verbunden ist, das vorgesehen ist, um eine Kupplung zwischen der Empfangsplatte (23) und einer Antriebsplatte (26) der Fliehkraftkupplung zu schaffen, wenn die Geschwindigkeit der Empfangsplatte einen bestimmten Schwellenwert überschreitet.

15. Getriebe nach einem der Ansprüche 10 bis 14, dadurch gekennzeichnet, daß die Zahnradgetriebekombination (49, 139) in verschiedener Weise betrieben wird, um das eine und das andere der beiden vorgenannten Übersetzungsverhältnisse zu verwirklichen, und zwar derart, daß sich bei einem Wechsel des Übersetzungsverhältnisses die Axialkraft in die das neu geschaltete Übersetzungsverhältnis stabilisierende Richtung ändert.

16. Getriebe nach einem der Ansprüche 10 bis 15, dadurch gekennzeichnet, daß der Getriebemechanismus (136, 180) funktionell zwischen einem Zwischenübertragungselement (12, 12a) und dem Abtriebselement (62) montiert ist, wobei der Getriebekomplex außerdem einen Antriebsmechanismus (133, 140) mit mindestens zwei Übersetzungsverhältnissen umfaßt, der funktionell zwischen dem Antriebselement (7) und dem Zwischenübertragungselement (12) montiert ist.

17. Getriebe nach Anspruch 16, dadurch gekennzeichnet, daß der Antriebsmechanismus (133, 140) empfindlich für das Moment auf dem Antriebselement (7) ist, um automatisch in ein relativ niedriges Übersetzungsverhältnis zu schalten, wenn das Moment auf dem Antriebselement einen oberen Schwellenwert überschreitet, und in ein relativ hohes Übersetzungsverhältnis, wenn das Moment auf dem Antriebselement wieder unter einen unteren Schwellenwert absinkt.

18. Getriebe nach Anspruch 17, gekennzeichnet durch Mittel (169), um den oberen Schwellenwert (181) mit der Drehgeschwindigkeit des Antriebselements leicht anwachsen zu lassen.

19. Getriebe nach einem der Ansprüche 1 bis 18, dadurch gekennzeichnet, daß das Gegenbelastungsmittel (73, 169) vorgesehen ist, um die selektiven Kupplungsmittel (59, 149) so zu steuern, daß das Getriebe von einem relativ geringen Übersetzungsverhältnis in ein höheres Über setzungsverhältnis schaltet, wenn die Axialkraft, die es erzeugt, die von dem schrägverzahnten Zahnrad erzeugte Axialkraft überschreitet.

20. Getriebe nach Anspruch 19, dadurch gekennzeichnet, daß das Kupplungsmittel von dem Gegenbelastungsmittel in Richtung auf den Zustand eines direkten Ganges belastet wird, der die Verzahnungen der beiden schrägverzahnten Zahnräder (142) entlastet und auf diese Weise die entgegengesetzten Axialkräfte (F_{AP}, F_{AC}) aufhebt, bis das Moment das Übertragungsvermögen der Kupplung überschreitet und das Wiederauftreten der Axialkraft bewirkt, welche die Rückkehr in das relativ geringe Übersetzungsverhältnis beschleunigt.

21. Getriebe nach einem der Ansprüche 10 bis 20, gekennzeichnet durch Axiallagermittel (57, 157, 112, 86), welche es den beiden schrägverzahnten Zahnrädern gestatten, sich axial aneinanderzulehnen, und zwar in einer Richtung, welche ihrer gegenseitigen Verschiebung unter der Wirkung der Axialkräfte (F_{AP}, F_{AC}), die bei der Übertragung eines Antriebsmoments auf das Antriebselement (7) auftreten, entgegengesetzt ist.

22. Getriebe nach einem der Ansprüche 1 bis 21, dadurch gekennzeichnet, daß die Kupplungsmittel eine Reibungsvorrichtung (9, 59, 149) umfassen, welche zwischen einer entkuppelten Position, in welcher das Übersetzungsverhältnis relativ niedrig ist und die genannten gegenseitig axial verschiebbaren Zahnräder ein Moment mittels Zahneingriff übertragen, und einer gekuppelten Position beweglich ist, in welcher das Übersetzungsverhältnis höher ist, während das durch Zahneingriff der gegenseitig axial verschiebbaren Zahnräder übertragene Moment zumindest teilweise aufgehoben ist, und daß die gegenseitig axial verschiebbaren Zahnräder so montiert sind, daß sie mittels ihrer Axialkraft das selektive Halten der Reibungsvorrichtung (9, 59, 149) in der entkuppelten Position gegen die Wirkung des Gegenbelastungsmittels (73, 169) steuern.

23. Getriebe nach einem der Ansprüche 1 bis 22, dadurch gekennzeichnet, daß es zwischen dem Antriebselement (7) und dem Abtriebselement (62) eine Folge von mehreren vorgenannten Getrieben in Form von Modulen (180) mit zwei Übersetzungsverhältnissen umfaßt, die jeweils als Gegenbelastungsmittel ein Drehzahlmeßmittel aufweisen, das empfindlich ist für die Drehgeschwindigkeit des einen der Elemente des Moduls (7, 12a, 12b), um den Modul gegen die Axialkraft (F_{AC}, F_{AP}) von zwei schrägverzahnten Zahnrädern (141, 142) einer Zahnradgetriebekombination mit Schrägverzahnung (139) des jeweiligen Moduls vom niedrigeren Übersetzungsverhältnis in das höhere Übersetzungsverhältnis schalten zu lassen.

24. Getriebe nach Anspruch 23, dadurch gekennzeichnet, daß den vorgenannten Modulen (180) ein Modul (140) vorangeht, in dem das Gegenbelastungsmittel im wesentlichen ein Rückstellmittel (158) ist, das danach strebt, den Modul (140) in den direkten Gang zu bringen, solange das Moment am Antrieb unter einem Schwellenwert (181) liegt.

25. Getriebe nach einem der Ansprüche 10 bis 12, dadurch gekennzeichnet, daß die Zahnradgetriebekombination (49) funktionell zwischen dem Antriebselement (7) und einer Reibungskupplungsvorrichtung (119) montiert ist, welche zumindest teilweise die vorgenannten selektiven Kupplungsmittel bildet, wobei die beiden Zahnräder (51, 52) der Kombination so montiert sind, daß ihre Axialkraft (F_{AC}, F_{AP}) danach strebt, die Reibungskupplungsvorrich tung (119) zusammenzupressen und auf diese Weise ein erstes Übersetzungsverhältnis zu verwirklichen, wobei Mittel vorgesehen sind, um die Reißung in der Reibungskupplungsvorrichtung einzuleiten, und das Drehzahlmeßmittel (89) vorgesehen ist, um die Reibungskupplungsvorrichtung (119) selektiv zu lockern und eine weitere Kupplung (109) zu aktivieren, um ein zweites Übersetzungsverhältnis zu verwirklichen.

26. Vorrichtung nach Anspruch 25, dadurch gekennzeichnet, daß die Mittel zur Einleitung der Reibung ein Ölbad umfassen, in dem die Reibungskupplungsvorrichtung (119) arbeitet.

27. Getriebe nach einem der Ansprüche 9 bis 12, umfassend ein erstes Planetengetriebe (49) mit Schrägverzahnung und ein zweites Planetengetriebe (94), dadurch gekennzeichnet, daß eine Welle (7) der Vorrichtung:
a) fest mit einem Sonnenrad (51) des ersten Getriebes (49) verbunden ist;
b) fest mit einem Element (227) zur selektiven Kupplung zwischen der Welle (7) und einem Sonnenrad (101) des zweiten Getriebes (94) verbunden ist;
c) axial beweglich ist, so daß die von der Schrägverzahnung des Sonnenrads (51) des ersten Getriebes (49) erzeugte Axialkraft (F_{AP}) danach strebt, das Kupplungselement (227) in eine Position der Entkupplung vom Sonnenrad des zweiten Getriebes zu bringen, und zwar gegen die Wirkung des drehzahlmessenden Gegenbelastungsmittels (224, 244), das danach strebt, das Kupplungselement in eine Position der durch das zweite Getriebe (94) gelingenden Kraftübertragung zwischen der Welle (7) und einem Zahnkranz (52) des ersten Getriebes (49) zu bringen.

28. Getriebe nach Anspruch 27, dadurch gekennzeichnet, daß das drehzahlmessende Gegenbelastungsmittel empfindlich für die Drehgeschwindigkeit der Welle (7) ist.

29. Getriebe nach Anspruch 27 oder 28, dadurch gekennzeichnet, daß die Zahnkränze (52, 102) der beiden Getriebe (49, 94) auf einem Freilauf (64, 229) montiert sind.

30. Getriebe nach einem der Ansprüche 27 bis 29, dadurch gekennzeichnet, daß die selektiven Kupplungsmittel ein Mittel zur selektiven Kupplung umfassen, um das eine (49) der zwei Getriebe (49, 94) unter der Wirkung einer Fliehkraftvorrichtung (73), welche einen der Zahnkränze (52, 102) der zwei Getriebe (49, 94) axial gegen die von seiner Schrägverzahnung erzeugte Axialkraft (F_{AC}) verschiebt, in den direkten Gang zu bringen.

31. Getriebe nach einem der Ansprüche 9 bis 12, dadurch gekennzeichnet, daß die selektive Kupplungsvorrichtung ein Kupplungselement (221) umfaßt, das fest mit einer axial beweglichen Welle (7) verbunden ist, an welcher eines der schrägverzahnten Zahnräder (51) befestigt ist, das eine Axialkraft erzeugt, und das Drehzahlmeßmittel massive Rollen (224) umfaßt, die vorgesehen sind, um von der Welle (7) zwischen dem Kupplungselement (221) und einer Rampe (226), welche radial nach außen mit dem Kupplungselement zusammenläuft, derart zur Drehung angetrieben zu werden, daß die Rollen (224), welche unter der Wirkung der Zentrifugalkraft danach streben, sich radial nach außen zu verschieben, das Kupplungselement (221) gegen die Axialkraft in die Kupplungsposition drücken.
